# EUROPÄISCHE PATENTANMELDUNG

(11) **EP 1 120 162 A2**
(43) Veröffentlichungstag der Anmeldung: **01.08.2001**
(21) Anmeldenummer: 01100870.3
(22) Anmeldetag: 16.01.2001
(51) Int. Cl.: B01J 31/16, C08G 85/00

(54) **Verwendung von molekulargewichtsvergrösserten Katalysatoren in einem Verfahren zur Asymmetrischen kontinuerlichen Hydrierung, neue molekulargewichtsvergrösserte Liganden und Katalysatoren**

(30) Priorität: 24.01.2000 DE 10002975
(71) Anmelder: Degussa AG, 40474 Düsseldorf (DE)
(72) Erfinder: Burkhardt, Olaf Dr., 2920 Kalmthout (DE); Wöltinger, Jens Dr., 63456 Hanau (DE); Bommarius, Andreas Prof., 30327 Atlanta, GA (US); Henniges, Hans Dr., 53111 Bonn (DE); Philippe, Jean-Louis Dr., 63303 Dreieich (DE); Karau, Andreas Dr., 67434 Neustadt (DE); Drauz, Karlheinz Prof., 63579 Freigericht (DE); Wandrey, Christian Prof. Dr., 52428 Jülich (DE); Liese, Andreas Dr., 52428 Jülich (DE); Laue, Stephan, 53639 Königswinter (DE)

(57) **Zusammenfassung**

Die vorliegende Erfindung richtet sich auf eine Verwendung von molekulargewichtsvergrößerter homogen löslicher Katalysatoren Verfahren zur asymmetrischen kontinuierlichen Hydrierung von C=C-, C=N- oder C=O-Doppelbindungen mittels molekulargewichtsvergrößerter homogen löslicher Katalysatoren in einem Membranreaktor.

Bisherige im Stand der Technik vorgeschlagene Hydrierverfahren liefen diskontinuierlich ab. Die kontinuierliche Fahrweise hilft dagegen Prozeßkosten zu sparen.

Angegeben werden auch neue molekulargewichtsvergrößerte Liganden und Katalysatoren.

## Beschreibung

Die vorliegende Erfindung ist auf eine Verwendung von Molekulargewichtsvergrößerten Katalysatoren in einem Verfahren zur asymmetrischen homogenen katalytischen Hydrierung von C=C-, C=N- oder C=O-Doppelbindungen gerichtet. Insbesondere wird dieses Verfahren kontinuierlich in einem sogenannten Membranreaktor betrieben.
Gleichfalls beschreibt die vorliegende Erfindung neue molekulargewichtsvergrößerte Liganden und Katalysatoren, welche zweckmäßig im erfindungsgemäßen Verfahren verwendet werden können.

Im großtechnischen Maßstab sind Verfahren, welche kontinuierlich arbeiten, aus naheliegenden Gründen sehr bevorzugt. Um Prozeßkosten zu sparen, werden in immer stärkerem Maße auch katalytisch arbeitende Prozesse in der Industrie etabliert. Der Versuch kontinuierliche Prozesse katalytisch durchzuführen ist schwierig, hat man doch mit Problemen wie z.B. Abtrennbarkeit von Produkt vom Katalysator, Inaktivierung des Katalysators über die Zeit oder Entwicklung geeigneter Katalysatoren zu kämpfen.

In letzter Zeit wird versucht, dieser Probleme mit molekulargewichtsvergrößerten homogen löslichen Katalysatoren Herr zu werden, welche über Nano- und Ultrafiltrationsmembranen vom niedermolekularen Produkt getrennt werden können. Molekulargewichtsvergrößerte Katalysatoren zur homogenen enantioselektiven Hydrierung sind aus dem Stand der Technik bereits bekannt (US 5,777,062). In dieser Schrift wird insbesondere auch deren Abtrennung aus der Reaktionsmischung beschrieben. Nicht erwähnt ist ein kontinuierlich arbeitender Prozeß.
In der J. Am. Chem. Soc. 1998, 120, 9481f. wird auf das Problem eingegangen, lösliche Molekulargewichtsvergrößerungen für u.a. Hydrierkatalysatoren herzustellen.
Wandrey et al. berichten über einen Einsatz eines homogen löslichen molekulargewichtsvergrößerten Hydrierkatalysators in einem Membranreaktor (Angew. Chem. 1990, 102, 445f.). Hier erfolgt die symmetrische Hydrierung des gewünschten Substrats NAD⁺ durch den Katalysator. Erst anschließend findet die asymmetrische Wasserstoffübertragung mit Hilfe einer Alkohol-Dehydrogenase auf die C=O-Bindung statt.

Aufgabe der vorliegenden Erfindung ist es, einen kontinuierlich laufenden katalytischen sowie asymmetrischen Hydrierprozeß anzugeben, in dem molekulargewichtsvergrößerte Katalysatoren vorzugsweise eingesetzt werden. Weiterhin besteht Bedarf für neue molekulargewichtsvergrößerte Liganden und Katalysatoren, welche zweckmäßiger Weise in einem kontinuierlich laufenden katalytischen sowie asymmetrischen arbeitenden Hydrierverfahren eingesetzt werden können.

Diese Aufgabe wird gelöst durch die Verwendung von molekulargewichtsvergrößerten Katalysatoren in einem Prozeß mit den Merkmalen des Anspruchs 1. Bevorzugte Ausgestaltungen sind in den Ansprüchen 2 bis 9 unter Schutz gestellt. Anspruch 10 ist auf eine bevorzugte Verwendung der durch das erfindungsgemäße Verfahren erhältlichen Verbindungen gerichtet.

Dadurch, daß man molekulargewichtsvergrößerte homogen lösliche Katalysatoren in einem Membranreaktor zur asymmetrischen kontinuierlichen Hydrierung von C=C-, C=N- oder C=O-Doppelbindungen einsetzt, wobei die asymmetrische Übertragung des Wasserstoffs auf das zu hydrierende Substrat durch den Katalysatoren bewerkstelligt wird, gelingt die Lösung der ins Auge gefaßten Aufgabe in überraschender, darum aber nicht minder vorteilhaften Art und Weise.

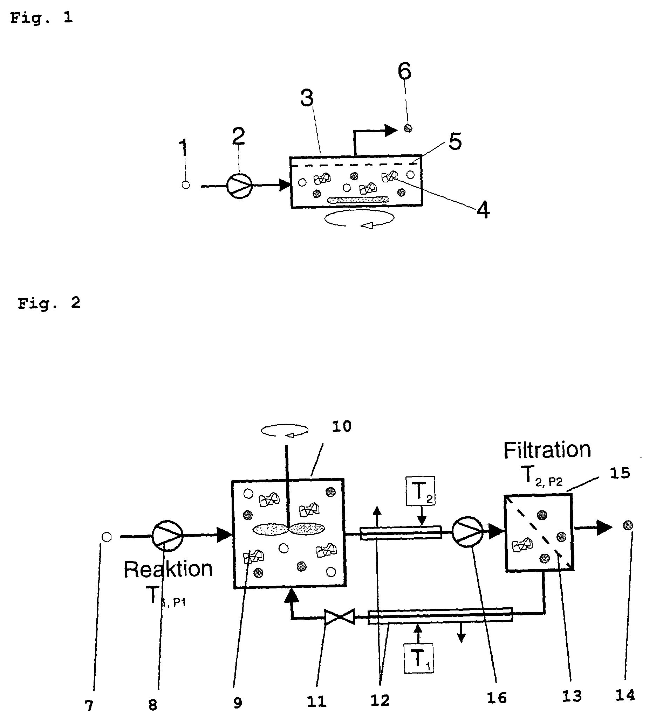

Die kontinuierliche Fahrweise kann dabei wie gewünscht im Cross-Flow-Filtrationsmodus (Fig. 2) oder als Dead-End-Filtration (Fig. 1) durchgeführt werden.
Im Dead-End-Betrieb wird Katalysator und Lösungsmittel im Reaktor vorgelegt und anschließend das gelöste Substrat zudosiert, wobei gleichzeitig eine Wasserstoffquelle anwesend sein muß. Das Substrat wird über den Katalysator enantioselektiv reduziert und anschließend über die Filtrationsmembran mit dem Lösungsmittelstrom aus dem Membranreaktor ausgetragen.
In der Cross-Flow-Fahrweise wird die Reaktionslösung, beinhaltend Lösungsmittel Substrat, Produkt und Katalysator sowie Wasserstoffquelle, an einer Membran an der eine Druckdifferenz anliegt, vorbeigeführt.
Für beide Fälle erfolgt das Zudosieren des gelösten Substrats in einer solchen Geschwindigkeit, daß die permeierte Lösung überwiegend enantioselektiv hydriertes Produkt enthält. Beide Verfahrensvarianten sind im Stand der Technik beschrieben (Engineering Processes for Bioseparations, Ed.: L.R. Weatherley, Heinemann, 1994, 135-165).

Die Wasserstoffquelle zur erfindungsgemäßen Hydrierung kann gasförmiger Wasserstoff sein, der während der Reaktion in das System eingeschleust wird. In diesem Fall befindet sich die gesamte Apparatur vorzugsweise in einer Wasserstoffatmosphäre bei Hydrierdruck, damit beidseitig der Filtrationsmembran der gleiche Wasserstoffdruck herrscht und Wasserstoff so nicht über die Filtrationsmembran aus dem System diffundieren kann. Dies würde einen hohen Verlust an Wasserstoff bedeuten.
Zusätzlich können so leichter die Druckverhältnisse über die Membran der Reaktion wie oben angesprochen angepaßt werden. Ein hoher Druckunterschied vor und nach der Membran würde zu Ausgasungen auf der Filtratseite führen, die apparative Schwierigkeiten zur Folge haben könnte. Außerdem könnte ein erhöhter Wasserstoffdurchtritt durch die Membran ein Fouling beschleunigen.
Vorzugsweise arbeitet man bei dieser Methode bei Drücken von 0,1 - 100, vorzugsweise 0,2 - 0,5 MPa Wasserstoff.

In einer weiteren bevorzugten Ausgestaltung setzt man bei der Hydrierung die Methode der Transferhydrierung ein. Sie ist beispielhaft in der Literatur beschrieben ("Asymmetric transferhydrogenation of C=O and C=N bonds", M. Wills et al. Tetrahedron: Asymmetry 1999, 10, 2045; "Asymmetric transferhydrogenation catylsed by chiral ruthenium complexes" R. Noyori et al. Acc. Chem. Res. 1997, 30, 97; "Asymmetric catalysis in organic synthesis", R. Noyori, John Wiley & Sons, New York, 1994, S.123; "Transition metals for organic Synthesis" Ed. M. Beller, C. Bolm, Wiley-VCH, Weinheim, 1998, Bd.2, S.97; "Comprehensive Asymmetric Catalysis" Ed.: Jacobsen, E.N.; Pfaltz, A.; Yamamoto, H., Springer-Verlag, 1999).
Als bevorzugte wasserstofferzeugende Substrate werden dabei Alkohole, Formiate, Cyclohexen oder Cyclohexadien, ganz besonders bevorzugt Isopropylalkohol in Gegenwart einer Base eingesetzt.

Im Falle der Transferhydrierung mit dem System Isopropylat hat es sich als nützlich erwiesen, auf eine optimale Basendosierung für die kontinuierliche Fahrweise zu achten.

Zur Bereitstellung der katalytischen Aktivität sollte eine Base, vorzugsweise Isopropylat, im Reaktionsgemisch präsent sein.

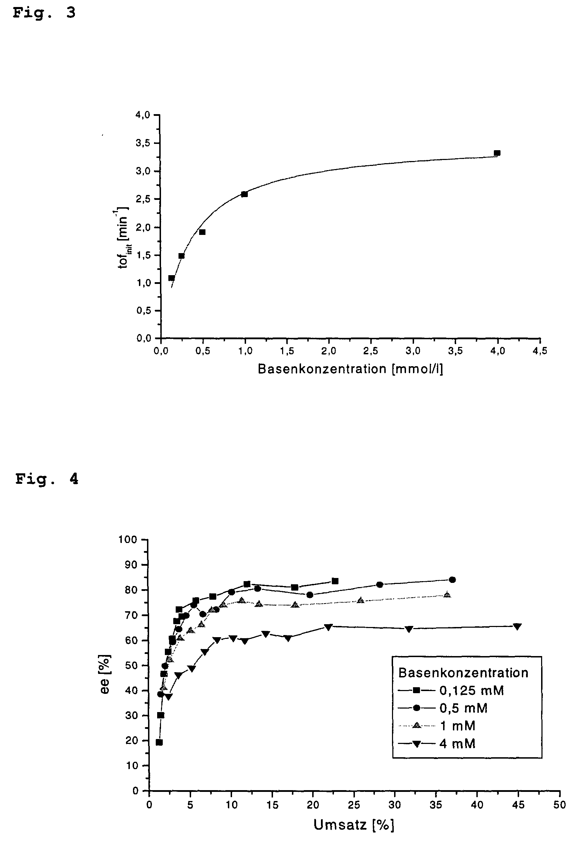

Es zeigt sich, daß hohe Basenkonzentrationen eine hohe katalytische Aktivität bedingen. In Fig. 3 ist der Einfluß der Basenkonzentration auf die turn over frequency (TOF) dargestellt.
Es wird, insbesondere beim vorliegenden Katalysatorsystem, der unerwartete Effekt beobachtet, daß hohe Basenkonzentrationen sich negativ auf den erzielbaren Enantiomerenüberschuss auswirken. In Fig. 4 ist der Einfluß der Basenkonzentration auf den ee-Wert bei der Reduktion von Acetophenon dargestellt.
Dieser Effekt wurde bisher nicht in der Literatur beschrieben. Mit Blick auf die Erzielung maximaler Enantiomerenüberschüsse muß daher ein Kompromiß zwischen ausreichender katalytischer Aktivität und möglichst hoher Enantioselektivität gefunden werden. Dies gilt insbesondere im Fall kontinuierlicher Reaktionsführung.

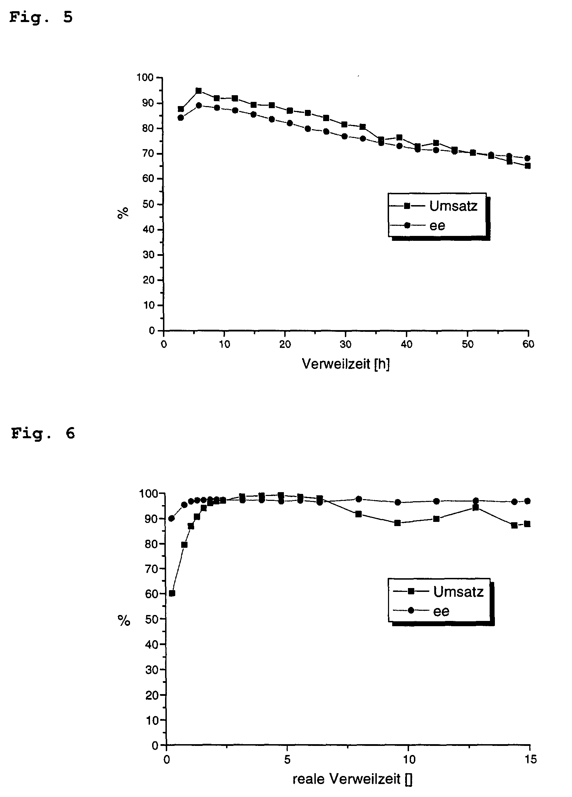

Das Experiment deutet daraufhin (Fig. 5), daß die einmalige Zudosierung einer hohen Basenmenge (5 Äquivalente Base bezogen auf den Katalysator) zu Beginn des Versuchs zwar eine ausreichende Aktivierung des Katalysators bewirkt. Im Verlaufe des Versuchs fällt jedoch sowohl der Enatiomerenüberschuss als auch der Umsatz konstant ab. Die konstante Umsatzabnahme kann hierbei durch eine reversible Desaktivierung des Katalysators durch Feuchtigkeit, sowie ein Ausspülen der Base aus dem Reaktor erklärt werden. Ferner bewirkt das Ausspülen der möglicherweise mit dem Katalysator assoziierten Base (als eine Art Cofaktor) eine Abnahme des Umsatzes.

Vorteilhaft erscheint daher die einmalige Aktivierung des Katalysators mit einer geringen Basenmenge (0,5-1,5 Äquivalent) in Kombination mit einer konstant niedrigen Basenzudosierung zur Kompensation der oben beschriebenen Effekte zu sein, um einen optimalen Prozessverlauf zu gewährleisten (Fig. 6).

Der molekulargewichtsvergrößerte homogen lösliche Hydrierkatalysator kann wie folgt aus Molekulargewichtsvergrößerung (Polymer), ggf. Linker und aktivem Zentrum aufgebaut sein.

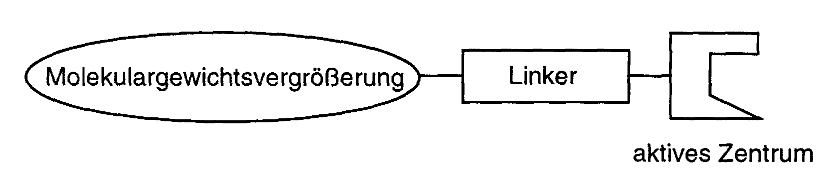

### Molekulargewichtsvergrößerung:

Die Molekulargewichtsvergrößerung kann im Rahmen der Erfindung frei gewählt werden. Sie wird einerseits durch Praktikabilitäts- und Kostenerwägungen, andererseits durch technische Rahmenbedingungen (Rückhaltevermögen, Löslichkeit etc.) begrenzt. Aus dem Stand der Technik sind einige Polymervergrößerungen für Katalysatoren bekannt (Reetz et al., Angew. Chem. 1997, 109, 1559f.; Seebach et al., Helv. Chim Acta 1996, 79, 1710f.; Kragl et al., Angew. Chem. 1996, 108, 684f.; Schurig et al., Chem. Ber./Recueil 1997, 130, 879f.; Bolm et al., Angew. Chem. 1997, 109, 773f.; Bolm et al. Eur. J. Org. Chem. 1998, 21f.; Baystone et al. in Speciality Chemicals 224f.; Salvadori et al., Tetrahedron: A-symmetry 1998, 9, 1479; Wandrey et al., Tetrahedron: Asymmetry 1997, 8, 1529f.; ibid. 1997, 8, 1975f.; Togni et al. J. Am. Chem. Soc. 1998, 120, 10274f., Salvadori et al., Tetrahedron Lett. 1996, 37, 3375f; WO 98/22415; insbesondere DE 19910691.6; Janda et al., J. Am. Chem. Soc. 1998, 120, 9481f.; Andersson et al., Chem. Commun. 1996, 1135f.; Janda et al., Soluble Polymers 1999, 1, 1; Janda et al., Chem. Rev. 1997, 97, 489; Geckler et al., Adv. Polym. Sci. 1995, 121, 31; White et al., in "The Chemistry of Organic Silicon Conpounds" Wiley, Chichester, 1989, 1289; Schuberth et al., Macromol. Rapid Commun. 1998, 19, 309; Sharma et al., Synthesis 1997, 1217; "Functional Polymers" Ed.: R.

Arshady, ASC, Washington, 1996; "Praktikum der Makromolekularen Stoffe", D. Braun et al., VCH-Wiley, Weinheim 1999).

Bevorzugte molekulargewichtsvergrößernde Polymere zur Anbindung der Liganden sind Polyacrylate, Polyvinylpyrrolidinone, Polysiloxane, Polybutadiene, Polyisoprene, Polyalkane, Polystyrole, Polyoxazoline oder Polyether (PEG, PEP) oder Mischungen derselben. Unter Mischungen wird im Rahmen der Erfindung die Tatsache verstanden, daß einzelne Polymere verschiedener Provenienz zu Blockpolymeren zusammenpolymerisiert werden. Auch statistische Mischungen der Monomere im Polymer sind möglich.

Ganz besonders bevorzugt sind Polyacrylate, Polysiloxane, Polystyrole und/oder Polyether für diesen Zweck geeignet.

Die molekulargewichtsvergrößernden Polymere können ein mittleres Molekulargewicht im Bereich von 1.000 - 1.000.000, vorzugsweise 5.000 - 500.000, besonders bevorzugt 5.000 - 300.000, g/mol aufweisen.

### Linker:

Zwischen eigentlichem Katalysator bzw. Ligand (aktivem Zentrum) und der Polymervergrößerung kann ein Linker eingebaut sein. Der Katalysator kann aber auch direkt an die Polymervergrößerung gebunden sein.
Der Linker dient dazu, einen Abstand zwischen aktivem Zentrum und Polymer aufzubauen, um gegenseitige für die Reaktion nachteilige Wechselwirkungen abzumildern bzw. auszuschalten.
Die Linker können durch den Fachmann im Prinzip frei gewählt werden. Sie sind nach den Gesichtspunkten auszuwählen, wie gut sie einerseits an das Polymer/Monomer, andererseits an das aktive Zentrum anzukoppeln sind. Geeignete Linker sind unter anderem den oben unter der Rubrik Molekulargewichtsvergrößerung erwähnten Literaturstellen zu entnehmen.

Im Rahmen der Erfindung sind diese eigentlich aktiven Hydrierkatalysatoren (aktive Zentren) also direkt oder bevorzugt über einen Linker ausgewählt aus der Gruppe

| | | |
|---|---|---|
| a) | -Si(R₂)- | |
| b) | -(SiR₂-O)ₙ- | n=1-10000 |
| c) | -(CHR-CHR-O)ₙ- | n=1-10000 |
| d) | -(X)ₙ- | n=1-20 |
| e) | Z-(X)ₙ- | n=0-20 |
| f) | -(X)n-W | n=0-20 |
| g) | Z-(X)ₙ-W | n=0-20 |

wobei
R bedeutet H, (C₁-C₈)-Alkyl, (C₆-C₁₈)-Aryl, (C₇-C₁₉)-Aralkyl, ((C₁-C₈)-Alkyl)₁₋₃-(C₆-C₁₈)-Aryl,
X bedeutet (C₆-C₁₈)-Arylen, (C₁-C₈)-Alkylen, (C₁-C₈)-Alkenylen, ((C₁-C₈)-Alkyl)₁₋₃-(C₆-C₁₈)-Arylen, (C₇-C₁₉)-Aralkylen,
Z bedeutet polymerseitig C(=O)O-, C(=O)NH-, C(=O)-, NR, O, CHR, CH₂, C=S, S, PR,
W bedeutet ligandenseitig C(=O)O-, C(=O)NH-, C(=O)-, NR, O, CHR, CH₂, C=S, S, PR,
an die Polymervergrößerung gebunden.
Weitere bevorzugte Verbindungen, die als Linker eingesetzt werden können, sind in folgendem Schema dargestellt:

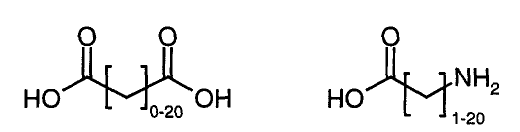

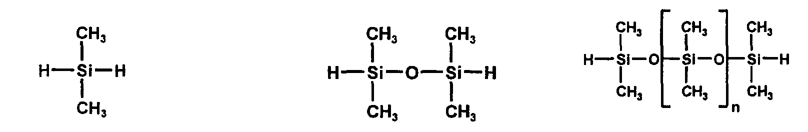

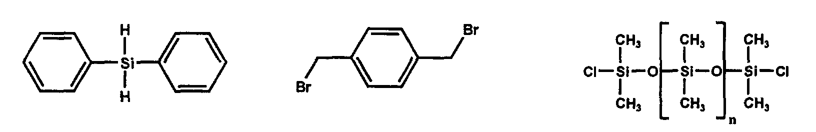

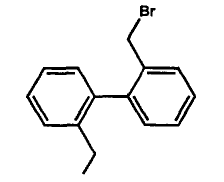

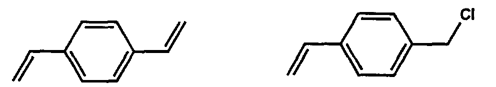

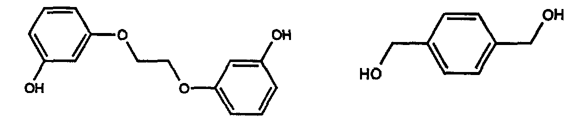

Ganz besonders bevorzugt sind jedoch Linker wie z. B. 1,4'-Biphenyl, 1,2-Ethylen, 1,3-Propylen, PEG-(2-10), α,ω-Siloxanylen oder 1,4-Phenylen sowie α,ω-1,4-Bisethylenbenzol oder Linker, welche ausgehend von Siloxanen der allgemeinen Formel I 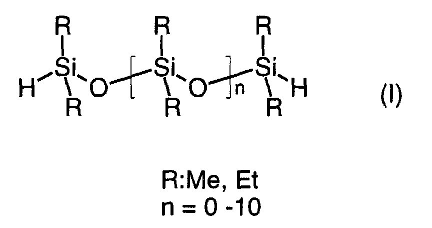 erhältlich sind. Diese lassen sich unter Hydrosilylierungsbedingungen (Übersicht über die Hydrosilylierungsreaktion von Ojima in The Chemistry of Organic Silicon Compounds, 1989 John Wiley & Sons Ltd., 1480 - 1526) leicht an evt. vorhandene Doppelbindungen in den Polymeren und geeignete funktionelle Gruppen der aktiven Zentren binden.

### Aktive Zentren:

Unter einem aktiven Zentrum versteht man im Rahmen der Erfindung den eigentlichen niedermolekularen Ligand, der bisher normalerweise für die Hydrierung benutzt wird. Dieser kann - wie oben dargelegt - direkt oder über einen wie oben angegebenen Linker an die Molekulargewichtsvergrößerung angebracht werden.

Als aktive Zentren kommen im Prinzip alle dem Fachmann für die asymmetrische katalytische Hydrierung bekannten Liganden in Frage. Geeignete Verbindungen finden sich in: "Asymmetric transfer hydrogenation of C=O and C=N bonds", M. Wills et al. Tetrahedron: Asymmetry 1999, 10, 2045; "Asymmetric transfer hydrogenation catylsed by chiral ruthenium complexes" R. Noyori et al. Acc. Chem. Res. 1997, 30, 97; "Asymmetric catalysis in organic synthesis", R. Noyori, John Wiley & Sons, New York, 1994, S.123; "Transition metals for organic Synthesis" Ed. M. Beller, C. Bolm, Wiley-VCH, Weinheim, 1998, Bd.2, S.97; "Comprehensive Asymmetric Catalysis" Ed.: Jacobsen, E.N.; Pfaltz, A.; Yamamoto, H., Springer-Verlag, 1999; "Catalytic Asymmetric Synthesis", Ed.: I. Ojima, Wiley-VCH, 1993, 1-39 sowie US 5,777,062,

Als besonders gut einzusetzende aktive Zentren gelten solche, welche zum einen eine hohe optische Ausbeute bei einer möglichst schnellen Hydrierung gewährleisten und so eine hohen Durchsatz erzeugen. Darüber hinaus sollte das aktive Zentrum gegen Luftsauerstoff hinreichend oxidationsunempfindlich sein, so daß der Einsatz von entgastem Lösungsmittel nicht von Nöten ist und eine ausreichende Lagerstabilität der Liganden gegeben ist.

Als ganz besonders vorteilhafte aktive Zentren sind anzusehen:

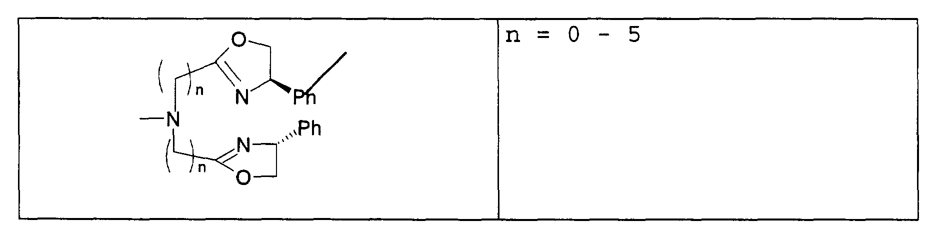

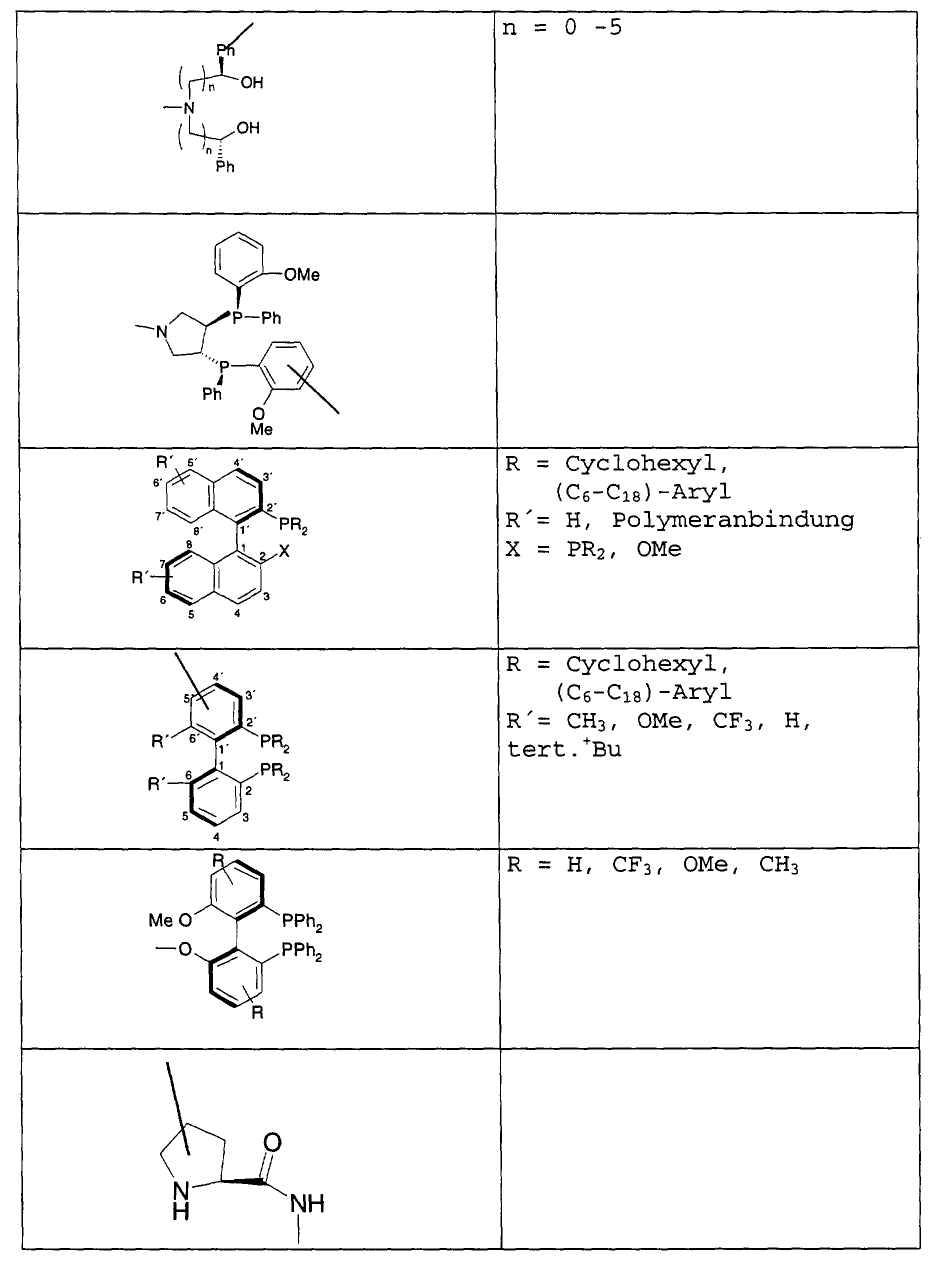

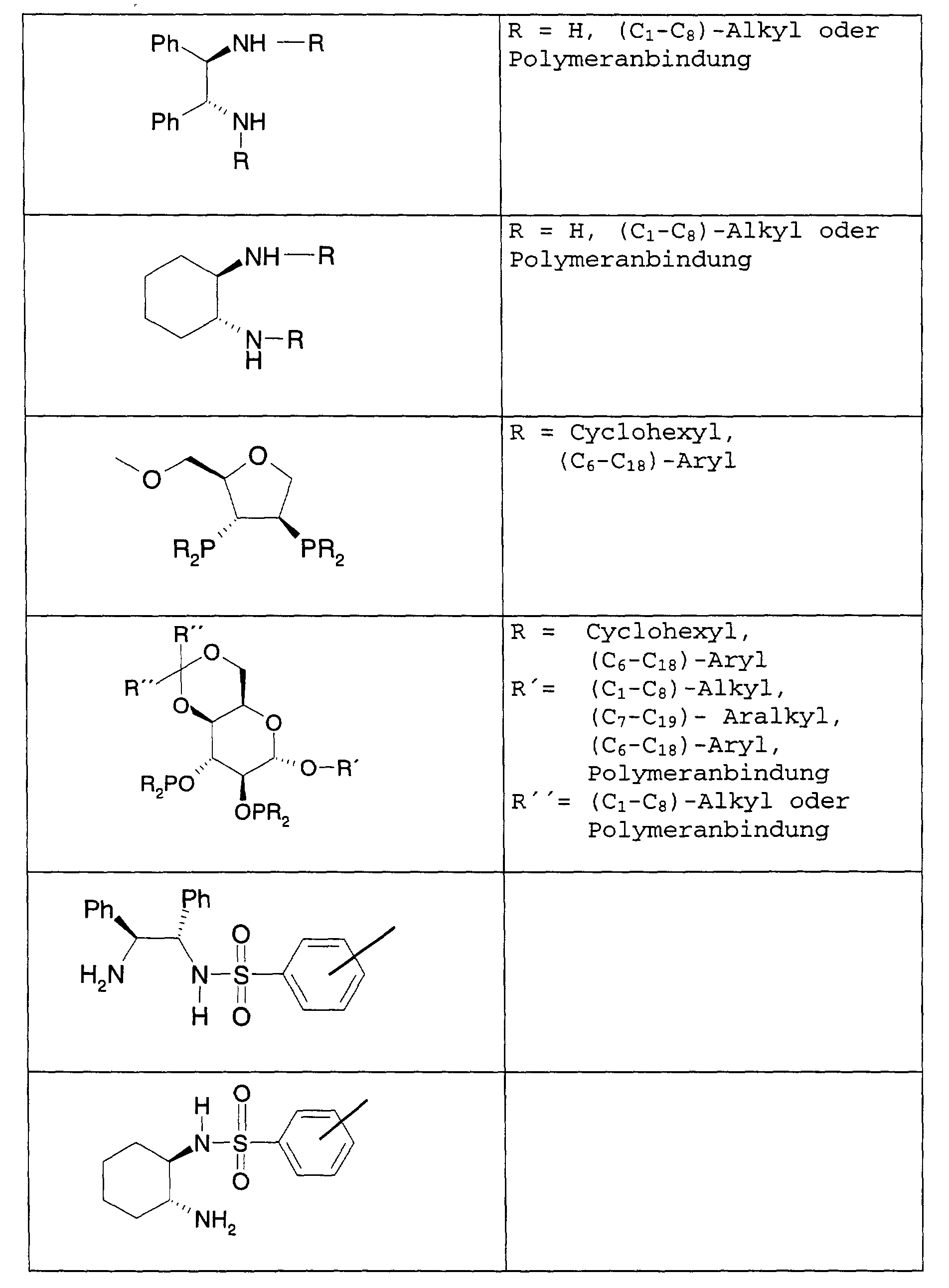

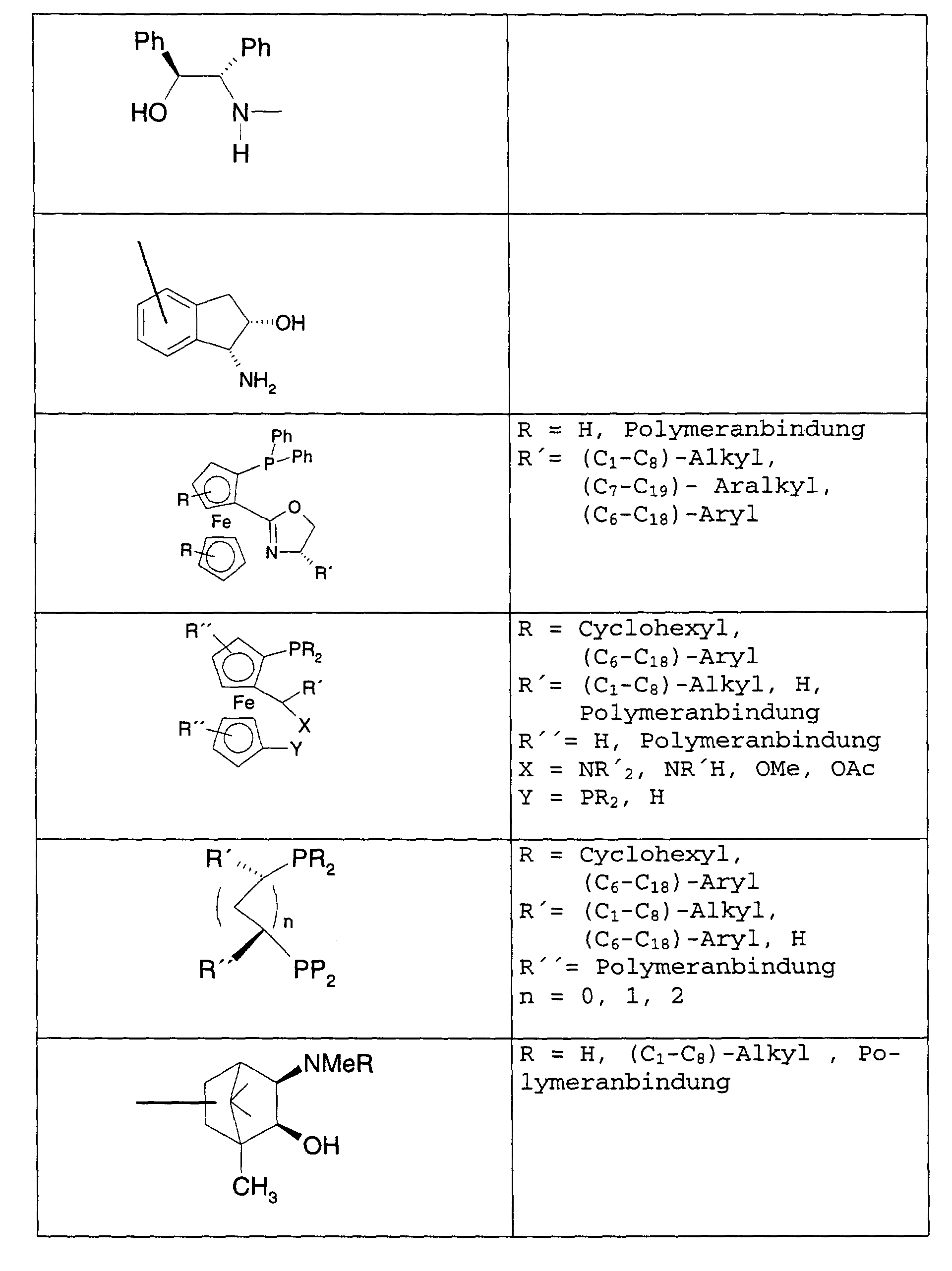

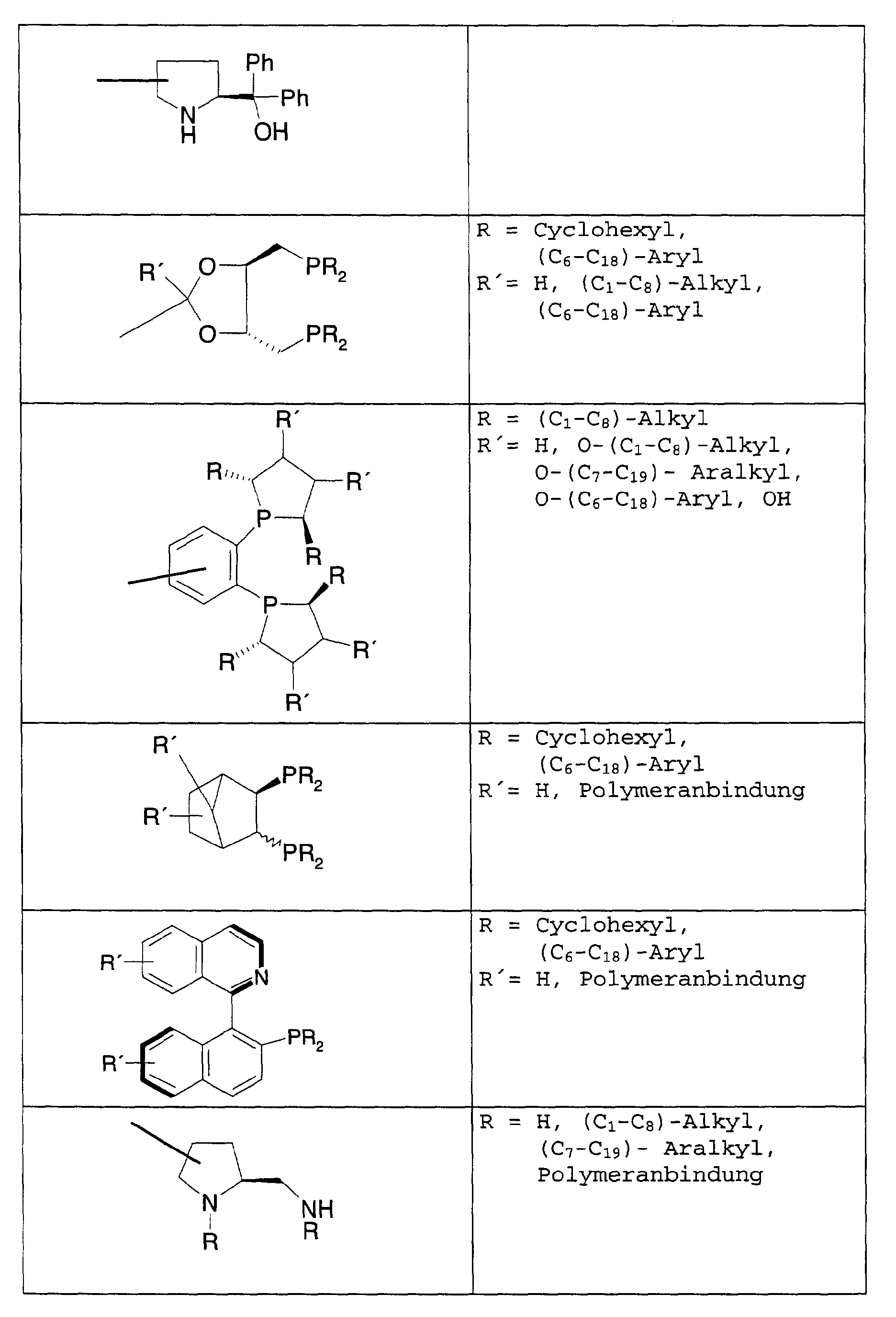

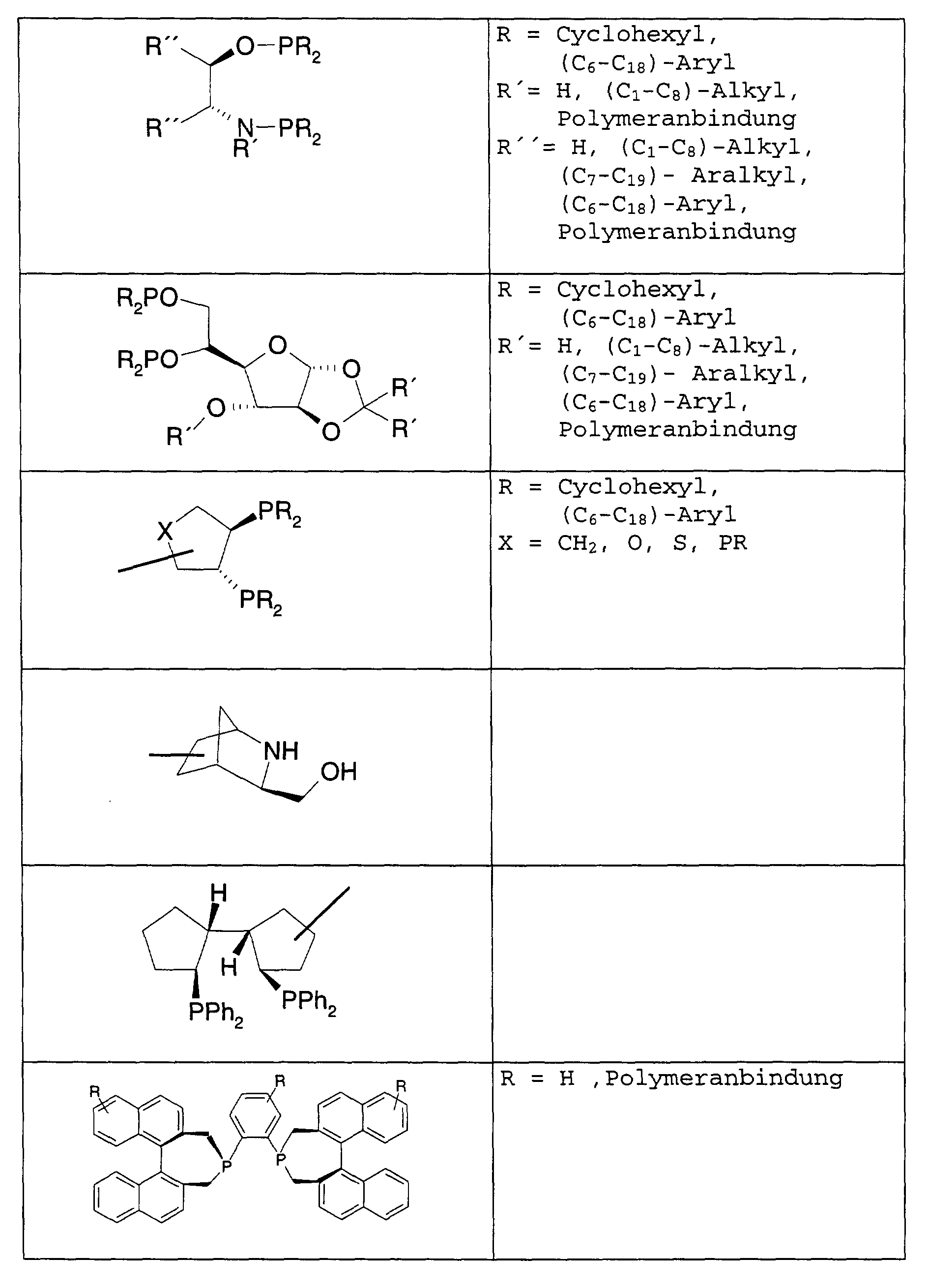

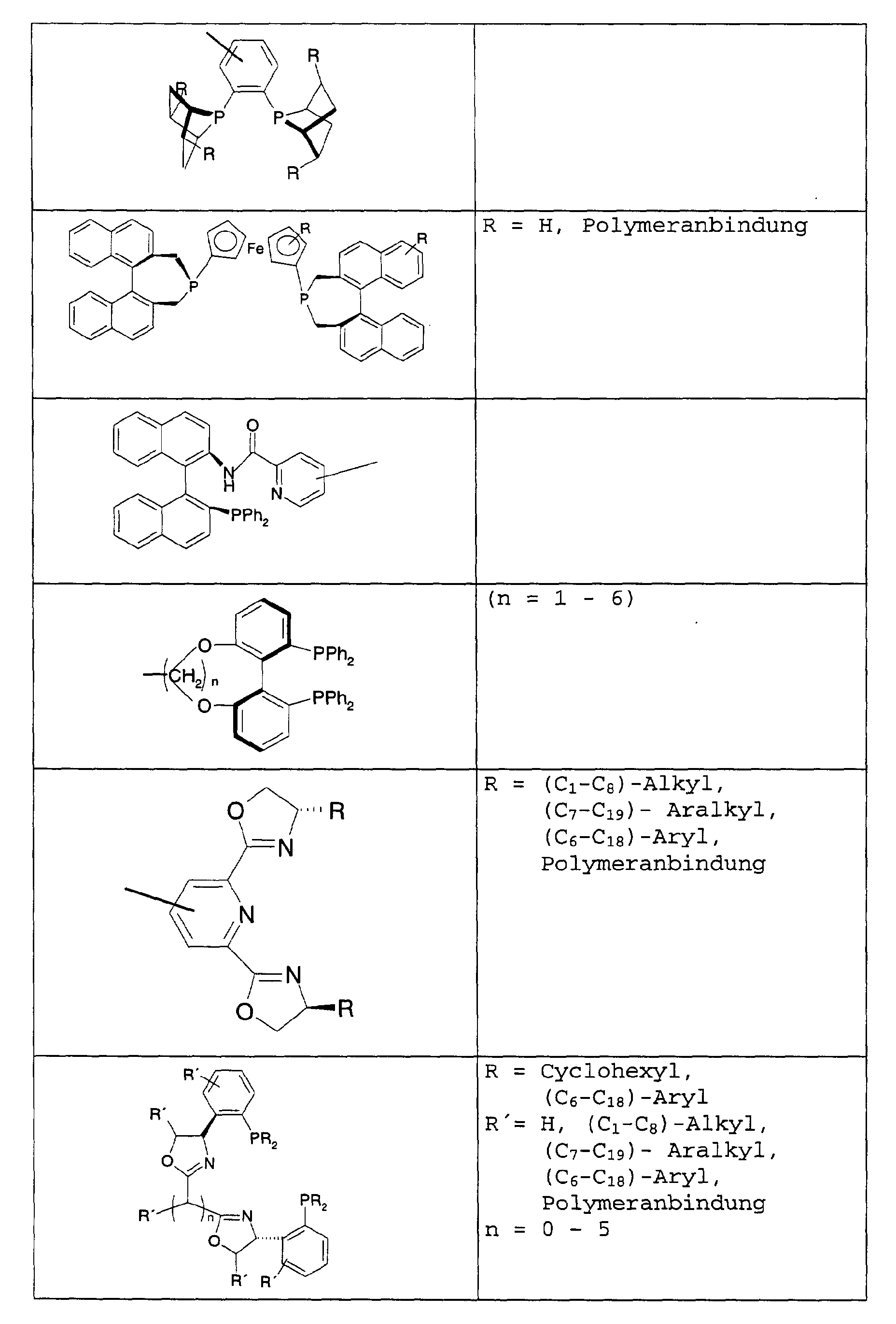

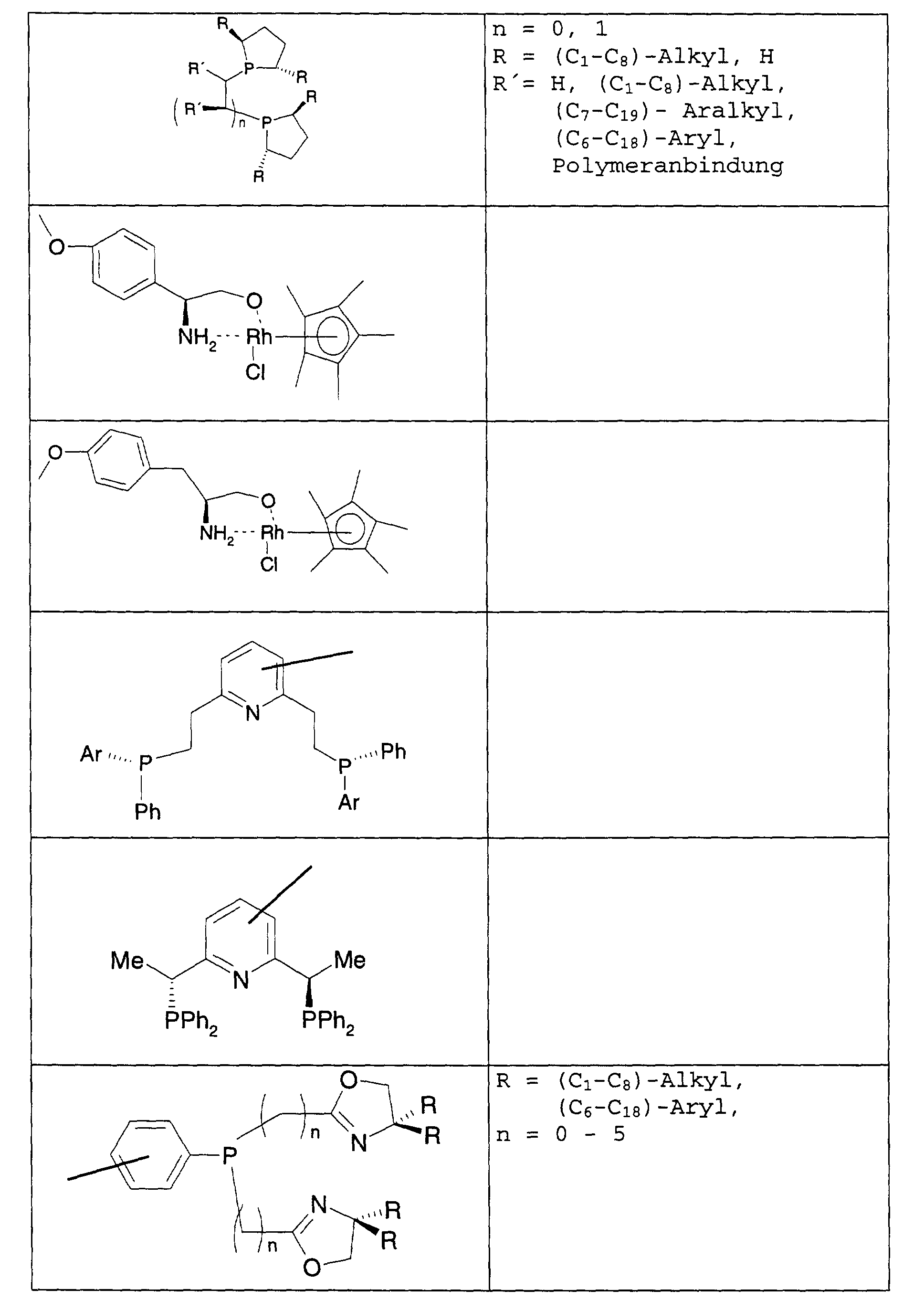

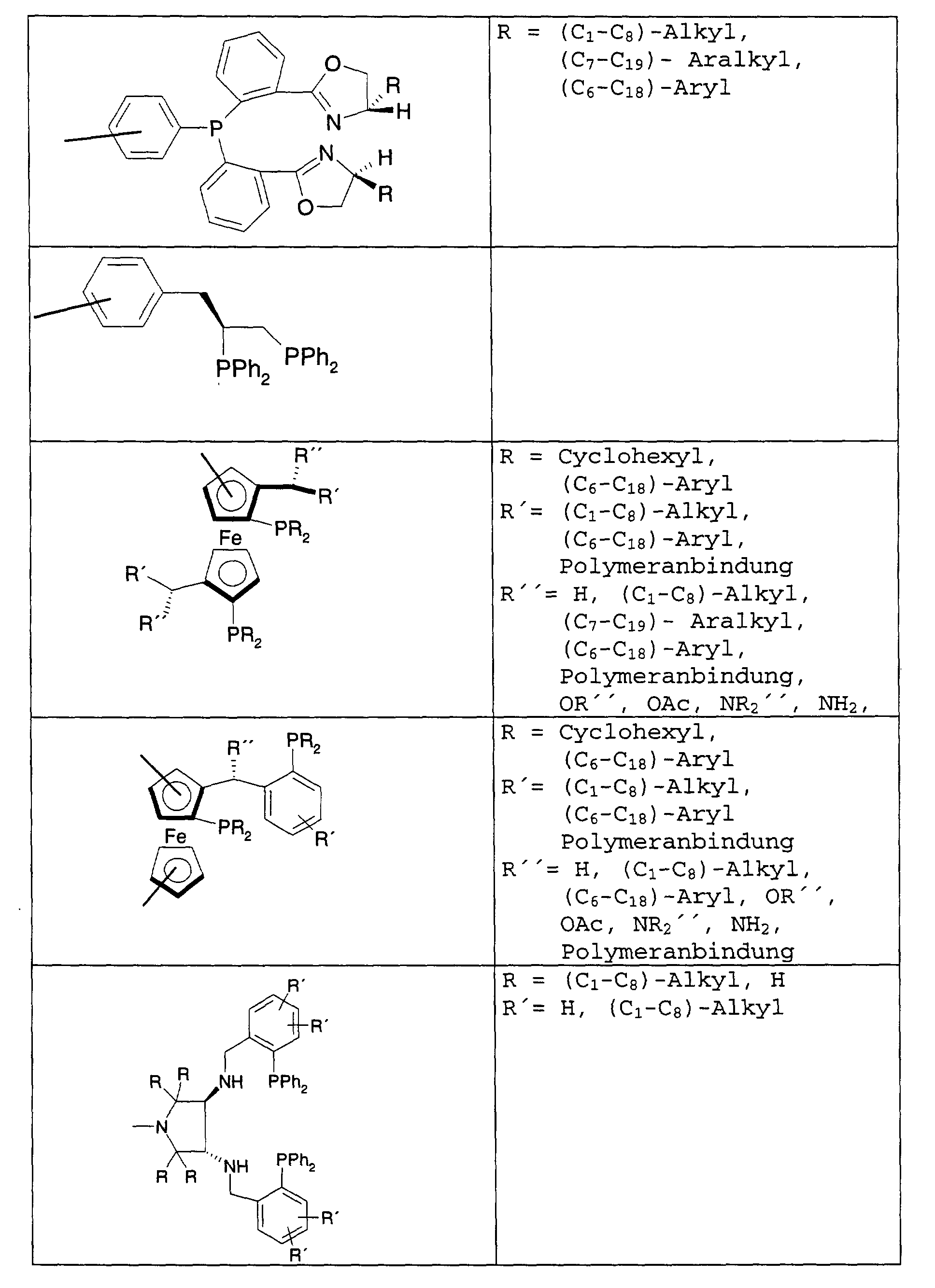

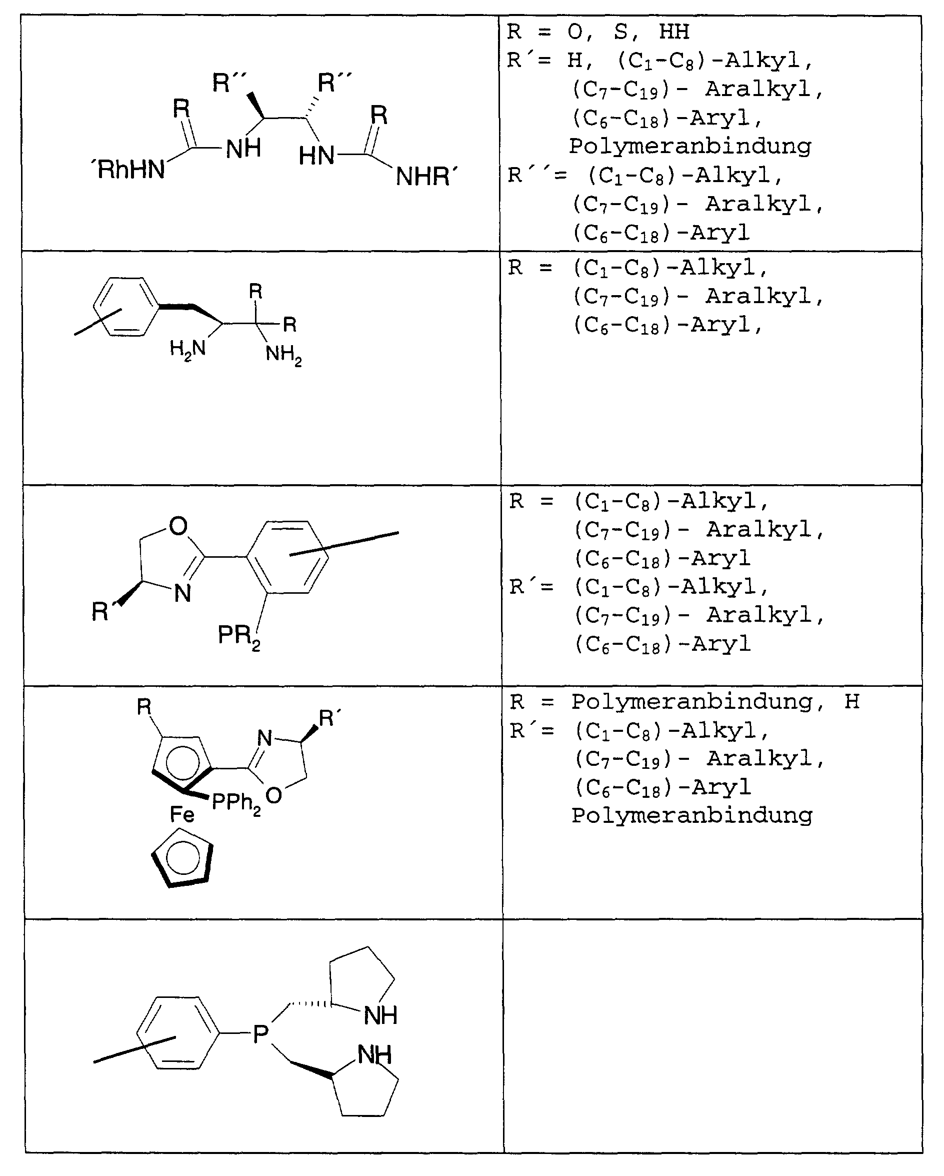

Die angedeuteten Bindungen in den in der Tabelle angegebenen chemischen Strukturen stellen vorteilhafte Anbindungsstellen sowohl für das Polymer als auch für den ggf. zum Einsatz kommenden Linker dar. Wahlweise ist eine der angedeuteten Möglichkeiten für die Anbindung ausreichend. Alternativ ist in der rechten Spalte der Tabelle vereinzelt für bestimmte Reste die Möglichkeit der Polymeranbindung angedeutet. Synonym ist darunter auch die Möglichkeit zur Anbindung der Linker zu verstehen.

Sofern Heteroatome in den aktiven Zentren vorhanden sind, welche nicht zur Komplexierung des Metalls herangezogen werden, erfolgt die Anbindung der aktiven Zentren bevorzugt über diese, wie zum Beispiel bei den allgemeinen Strukturen 1-3 über die Aminofunktion.
Bei der allg. Struktur 4 ist die Anknüpfung in den Positionen 5-7 oder 5'-7' besonders geeignet, äußerst bevorzugt ist die 6 bzw. 6'-Position.
Bei der allg. Struktur 5 ist die 4-6 bzw. 4'-6'-Position gut geeignet. Besonders gut ist die 5 oder 6 oder 5' oder 6'-Position auszuwählen.
Als besonders bevorzugt einzusetzende aktive Zentren gelten die ersten fünf allgemeinen Strukturen der obigen Tabelle. Äußerst bevorzugt sind als aktive Zentren Di-1,3-amino-phosphine, ggf. der folgenden Struktur 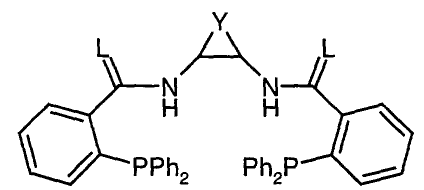 wobei Y eine (C₁-C₈)-Alkylen-Gruppe sein kann, die wahlweise maximal ungesättigt oder teilweise oder ganz gesättigt sein kann, und/oder ein oder mehrere Heteroatome wie N, P, O, S enthalten kann,
L = HH, O oder S sein kann.

Es liegt im Rahmen der Erfindung, daß nach Maßgabe des Wissens eines Fachmanns die oben genannten Bestandteile des molekulargewichtsvergrößerten Katalysators (Molekularvergrößerung, Linker, aktives Zentrum) im Hinblick auf eine optimale Reaktionsführung beliebig kombiniert werden können.

Kombination von Molekulargewichtsvergrößerung zu Linker/aktivem Zentrum:
Im Prinzip gibt es zwei Vorgehensweisen, wie die Linker/aktiven Zentren an die Molekulargewichtsvergrößerung angehängt werden können:
a) das katalytisch aktive Zentrum kann mit angebundenem Linker oder direkt an ein Monomer gebunden werden und dieses wird anschließend in Gegenwart nicht modifizier ter Monomere polymerisiert, oder
b) das katalytisch aktive Zentrum wird über einen Linker oder direkt an die Molekulargewichtsvergrößerung gebunden.
Ggf. können Polymere nach a) oder b) erstellt werden, welche weiterhin mit anderen Polymeren, welche katalytisch aktive Zentren aufweisen und nach a) oder b) hergestellt sein können, copolymerisiert werden können.

Weiterhin gilt prinzipiell für die Anzahl der Linker/aktiven Zentren pro Monomer im Polymer, daß möglichst viele derartige katalytisch aktive Zentren auf einem Polymer Platz finden sollten, so daß der Umsatz pro Polymer dadurch gesteigert ist. Auf der anderen Seite sollten die Zentren jedoch einen solchen Abstand voneinander einnehmen, daß eine gegenseitige negative Beeinflussung der Reaktivität (TOF, Selektivität) minimiert wird bzw. gar nicht erst stattfindet. Vorzugsweise sollte daher der Abstand der Linker/aktiven Zentren im Polymer voneinander im Bereich von 1-200 Monomereinheit, vorzugsweise 5-25 Monomereinheiten, liegen.

In einer vorteilhaften Ausgestaltung werden dabei solche Stellen im Polymer oder zu polymerisierendem Monomer zur Anbindung des Linkers/aktivem Zentrum herangezogen, welche sich leicht funktionalisieren lassen bzw. es erlauben, schon eine vorhandene Funktionalität zur Anbindung zu benutzen. So eignen sich bevorzugt Heteroatome oder ungesättigte Kohlenstoffatome zum Aufbau der Anbindung.

Z.B. können im Falle von Styrol/Polystyrol die vorhanden Aromaten als Verbindungspunkte zu den Linkern/aktiven Zentren herangezogen werden. An diese Aromaten können, vorzugsweise in 3-, 4-, 5-Stellung, besonders bevorzugt ist die 4-Stellung, über die normale Aromatenchemie Funktionalitäten gut angeknüpft werden. Vorteilhaft ist aber auch, der zu polymerisierenden Mischung z.B. bereits funktionalisiertes Monomer zuzumischen und nach der Polymerisation an die im Polystyrol vorhandenen Funktionalitäten den Linker zu binden. Vorteilhaft für diesen Zweck sind z.B. para-Hydroxy-, para-Chlormethyl- oder para-Aminostyrolderivate geeignet.

Für Polyether bietet sich die ohnehin vorhandene terminale OH-Gruppe zur Anbindung an die Linker/aktiven Zentren durch Ester- oder Etherbildung oder durch Oxidation dieser Gruppe zu einer Säuregruppe mit anschließender Veresterung oder Amidbildung an (Nagel et al., Chem. Ber. 1986, 119, 3326-3343; Nagel et al., Topics in Catalysis, 1998, 5, 3-23).

Im Falle der Polyacrylate ist im Monomerbestandteil jeweils eine Säuregruppe oder Estergruppe vorhanden, an der vor oder nach der Polymerisation der Linker oder das aktive Zentrum vorzugsweise über eine Ester- oder Amidbindung angebunden werden kann.

Polysiloxane als Molekulargewichtsvergrößerung werden vorzugsweise gleich so aufgebaut, daß neben Dimethylsilaneinheiten auch Hydromethylsilaneinheiten vorliegen. An diesen Stellen können dann weiterhin die Linker/aktiven Zentren über eine Hydrosilylierung angekoppelt werden.
Vorzugsweise lassen sich diese unter Hydrosilylierungsbedingungen (Übersicht über die Hydrosilylierungsreaktion von Ojima in The Chemistry of Organic Silicon Compounds, 1989 John Wiley & Sons Ltd., 1480 - 1526) an die ins Auge gefaßten Funktionalitäten im Polymer anbinden.
Geeignete derart modifizierte Polysiloxane sind in der Literatur bekannt ("Siloxane polymers and copolymers" White et al., in Ed. S. Patai "The Chemistry of Organic Silicon Compounds" Wiley, Chichester, 1989, 46, 2954; C. Wandrey et al. TH:Asymmetry 1997, 8, 1975).

### Kombination von Linker zu aktivem Zentrum:

Was für die Verbindung von Polymer zu Linker/aktivem Zentrum gilt, ist synonym für die Anbindung des aktiven Zentrums an den Linker anzuwenden.

So kann die Linkeranbindung an die aktiven Zentren bevorzugt über Heteroatome oder bestimmte Funktionalitäten wie C=O, CH₂, O, N, S, P, Si, B erfolgen, wobei bevorzugt E-ther-/Thioetherbindungen, Aminbindungen, Amidbindungen geknüpft oder Veresterungen, Alkylierungen, Silylierungen sowie Additionen an Doppelbindungen durchgeführt werden.

Äußerst bevorzugt sind folgende Strukturen, wobei die Indices x, y, z frei wählbar sind jedoch vorteilhaft in dem Bereich 1-200 für x, 1-30 für y und 1-30 für z liegen sollten (Schema 1).

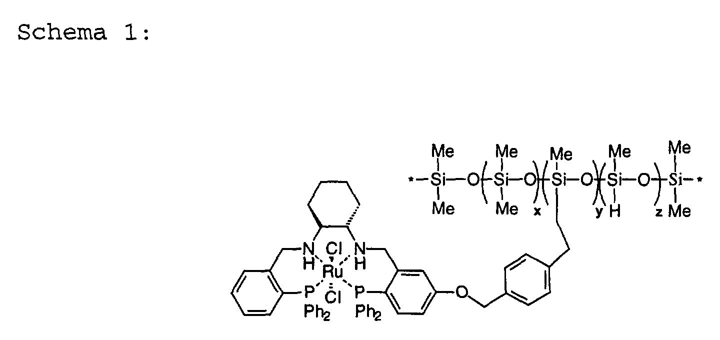

In einer weiteren Ausgestaltung befaßt sich die Erfindung mit einer Verwendung der erfindungsgemäß hydrierten Produkte in Verfahren zur Herstellung organischer Verbindungen.

Sofern sich die Aufgabe der Erfindung auf das Auffinden neuer vorteilhaft im erfindungsgemäßen Verfahren einsetzbarer Hydrierliganden/-katalysatoren bezieht, wird sie gelöst durch die Merkmale des Anspruchs 11. Ansprüche 12 bis 15 sind auf besondere Ausführungsformen dieser Katalysatoren gerichtet. Anspruch 16 schützt ein bevorzugtes Herstellungsverfahren, und Anspruch 17 ist auf einen erfindungsgemäßen Katalysator gerichtet.

Die erfindungsgemäße Aufgabe wird insbesondere gelöst durch molekulargewichtsvergrößerte Liganden aufweisend homochirale aktive Zentren aus Di-1,3-aminophosphinen wobei diese Zentren über einen Linker ausgewählt aus der Gruppe

| | | |
|---|---|---|
| a) | -Si(R₂)- | |
| b) | -(SiR₂-O)ₙ- | n=1-10000 |
| c) | -(CHR-CHR-O)ₙ- | n=1-10000 |
| d) | -(X)ₙ- | n=1-20 |
| e) | Z-(X)ₙ- | n=0-20 |
| f) | -(X)ₙ-W | n=0-20 |
| g) | Z-(X)ₙ-W | n=0-20 |

wobei
R bedeutet H, (C₁-C₈)-Alkyl, (C₆-C₁₈)-Aryl, (C₇-C₁₉)-Aralkyl, ((C₁-C₈)-Alkyl)₁₋₃-(C₆-C₁₈)-Aryl,
X bedeutet (C₆-C₁₈)-Arylen, (C₁-C₈)-Alkylen, (C₁-C₈)-Alkenylen, ((C₁-C₈)-Alkyl)₁₋₃-(C₆-C₁₈)-Arylen, (C₇-C₁₉)-Aralkylen,
Z bedeutet polymerseitig C(=O)O-, C(=O)NH-, C(=O)-, NR, O, CHR, CH₂, C=S, S, PR,
W bedeutet ligandenseitig C(=O)O-, C(=O)NH-, C(=O)-, NR, O, CHR, CH₂, C=S, S, PR,
oder direkt an das molekulargewichtsvergrößernde Polymer gebunden sind.

Für die Molekulargewichtsvergrößerung gilt das eingangs im Verfahrensteil genannte hier ebenfalls.

Bevorzugt wird ein Ligand eingesetzt, der als aktives Zentrum eine N,N'-Bis-(2-Diphenylphosphanyl-benzyl)-cyclohexyl-1,2-diamin-einheit aufweist.

Der Ligand kann vorzugsweise dadurch hergestellt werden, daß man
a) das katalytisch aktive Zentrum mit angebundenem Linker oder direkt an ein Monomer bindet und dieses in Gegenwart nicht modifizierter Monomere polymerisiert,
b) das katalytisch aktive Zentrum über einen Linker oder direkt an das fertige Polymer bindet, oder
c) Polymere nach a) oder b) erstellt und diese mit anderen Polymeren copolymerisiert, welche katalytisch aktive Zentren aufweisen können.

Die erfindungsgemäßen Liganden werden vorzugsweise in dem erfindungsgemäßen Verfahren eingesetzt. Ganz vorteilhaft ist deren Einsatz in Zusammenhang mit der Methode der Transferhydrierung im erfindungsgemäßen Prozeß.

Eine weitere Ausgestaltung der Erfindung ist auf speziell im erfindungsgemäßen Verfahren einzusetzende Katalysatoren gerichtet, welche aus den erfindungsgemäßen Liganden aufweisend eine N,N'-Bis-(2-Diphenylphosphanyl-benzyl)cyclohexyl-1,2-diamin-einheit und Metallen oder Metallionen ausgewählt aus der Gruppe
Ru, Rh, Ir, Pd, Ni, Pt, Co
aufgebaut sind.

Im Rahmen der Erfindung wird unter Membranreaktor jedwedes Reaktionsgefäß verstanden, bei dem der molekulargewichtsvergrößerte Katalysator in einem Reaktor eingeschlossen wird, während niedermolekulare Stoffe dem Reaktor zugeführt werden oder ihn verlassen können. Dabei kann die Membran direkt in den Reaktionsraum integriert werden oder außerhalb in einem separaten Filtrationsmodul eingebaut sein, bei der die Reaktionslösung kontinuierlich oder intermittierend durch das Filtrationsmodul strömt und das Retentat in den Reaktor zurückgeführt wird. Geeignete Ausführungsformen sind u.a. in der WO98/22415 und in Wandrey et al. in Jahrbuch 1998, Verfahrenstechnik und Chemieingenieurwesen, VDI S. 151ff.; Wandrey et al. in Applied Homogeneous Catalysis with Organometallic Compounds, Vol. 2, VCH 1996, S.832 ff.; Kragl et al., Angew. Chem. 1996, 6, 684f. beschrieben.

Unter einem molekulargewichtsvergrößerten Ligand/Katalysator ist im Rahmen der Erfindung ein solcher zu verstehen, bei dem das molekulargewichtsvergrößernde Polymer kovalent an das aktive Zentrum gebunden ist.

Als (C₁-C₈)-Alkyl sind anzusehen Methyl, Ethyl, *n*-Propyl, Isopropyl, *n*-Butyl, Isobutyl, *sec*-Butyl, *tert*-Butyl, Pentyl, Hexyl, Heptyl oder Octyl samt aller Bindungsisomeren.

Unter einem (C₆-C₁₈)-Arylrest wird ein aromatischer Rest mit 6 bis 18 C-Atomen verstanden. Insbesondere zählen hierzu Verbindungen wie Phenyl-, Naphthyl-, Anthryl-, Phenanthryl-, Biphenylreste. Diese können einfach oder mehrfach mit (C₁-C₈)-Alkoxy, (C₁-C₈)-Haloalkyl, OH, Cl, NH₂, NO₂ substituiert sein. Außerdem kann er ein oder mehrere Heteroatome wie N, S, O enthalten.

(C₁-C₈)-Alkoxy ist ein über ein Sauerstoffatom an das betrachtete Molekül gebundener (C₁-C₈)-Alkyl-Rest.

(C₁-C₈)-Haloalkyl ist ein mit einem oder mehreren Halogenatomen substituierter (C₁-C₈)-Alkyl-Rest. Als Halogenatome kommen insbesondere Chlor und Fluor in Betracht.

Ein (C₇-C₁₉)-Aralkylrest ist ein über einen (C₁-C₈)-Alkylrest an das Molekül gebundener (C₆-C₁₈)-Arylrest.

Unter dem Begriff Acrylat wird im Rahmen der Erfindung auch der Begriff Methacrylat verstanden.

Die dargestellten chemischen Strukuren beziehen sich auf alle möglichen Stereoisomeren, die durch Abänderung der Konfiguration der einzelnen chiralen Zentren, Achsen oder Ebenen erreicht werden können, also alle möglichen Diastereomere, sowie alle darunter fallende optische Isomere (Enantiomere).

Unter kontinuirlicher Reaktion wird im Rahmen der Erfindung auch die repetitiv. Batch Vahrweise (Batch-UF). Dabei wird der Reaktor bis auf das Polymer entlehrt, die Lösung durch die Membran gedrückt wird. Der molekulargewichtsvergrößerte Katalysator verbleibt im Reaktor und reagiert mit dem neu zugegebenen Substrat und der Katalysezyklus beginnt von vorn.

### Beschreibungen der Zeichnungen:

Fig. 1 zeigt einen Membranreaktor mit Dead-End-Filtration. Das Substrat 1 wird über eine Pumpe 2 in den Reaktorraum 3 überführt, der eine Membran 5 aufweist. Im rührerbetriebenen Reaktorraum befinden sich neben dem Lösungsmittel der Katalysator 4, das Produkt 6 und nicht umgesetztes Substrat 1. Über die Membran 5 wird hauptsächlich niedermolekulares 6 abfiltriert.

Fig. 2 zeigt einen Membranreaktor mit Cross-Flow-Filtration. Das Substrat 7 wird hier über die Pumpe 8 in den gerührten Reaktorraum überführt, in dem sich auch Lösungsmittel, Katalysator 9 und Produkt 14 befindet. Über die Pumpe 16 wird ein Lösungsmittelfluß eingestellt, der über einen ggf. vorhandenen Wärmetauscher 12 in die Cross-Flow-Filtrationszelle 15 führt. Hier wird das niedermolekulare Produkt 14 über die Membran 13 abgetrennt. Hochmolekularer Katalysator 9 wird anschließend mit dem Lösungsmittelfluß ggf. wieder über einen Wärmetauscher 12 ggf. über das Ventil 11 zurück in den Reaktor 10 geleitet.

### Beispiele: Tetrahydrosalene:

### Darstellung von 2-Diphenylphosphanyl-benzaldehyd

5 ml 2-Bromo-benzaldehyd (43 mmol) und 11,15 ml Diphenylphosphin (64,5 mmol) werden in einem Dreihalskolben mit Rückflusskühler nach Zugabe von 5,9 ml Triethylamin (43 mmol) und 334 mg Tetrakis-(triphenylphosphin)-palladium (0,28 mmol) in 150 ml absolutem Toluol unter Schutzgasatmosphere refluxiert. Im Verlauf der Reaktion fällt Triethylaminhydrobromid als weisser Feststoff aus. Nach 12 Stunden wird die Reaktionslösung filtriert, drei mal mit gesättigter Ammoniumhydrochlorid-Lösung und gesättigter Natriumchloridlösung gewaschen und das Lösungsmittel am Rotationsverdampfer entfernt. Das erhaltene Rohprodukt wird aus Methanol umkristallisiert. Ausbeute 10,61 g (85 % d. Th.).

Darstellung von (1R,2R)-*N*-(2-Diphenylphosphanyl-benzyl)cyclohexan-1,2-diamin

Zu einer Lösung von 3,3 g (1R,2R)-Cyclohexane-1,2-diamin (28 mmol) in 500 ml absolutem Ethanol wird bei 0° C unter Schutzgasatmosphere eine auf 45 °C erwärmte Lösung von 2,5 g 2-Diphenylphosphanyl-benzaldehyd (8,6 mmol) in 250 ml absolutem Ethanol über einen Zeitraum von 16 Stunden zugetropft. Die Reaktionslösung wird eine Stunde bei 0° C gerührt und anschließend 1,37 g Natriumborhydrid (36 mmol) zugesetzt. Man läßt das Reaktionsgemisch langsam auf Raumtemperatur auftauen und weitere 12 Stunden rühren. Nachfolgend wird die Reaktion durch Zugabe von 100 ml Aceton gequenscht und das Lösungsmittel am Rotationsverdampfer vollständig entfernt. Der erhaltene Rückstand wird durch Zugabe von 100 ml gesättigter Ammoniumhydrochlorid-Lösung und 100 ml Methylenchlorid vollständig aufgelöst. Anschließend wird die organische Phase abgetrennt und drei mal mit Wasser gewaschen. Abschließend wird mit 100 ml 10%iger Salzsäure überschichtet und geschüttelt. Das Produkt fällt nach kurzer Zeit im Kühlschrank als weisse Masse (Hydrochlorid) aus.

Nach Trocknem im Hochvakuum ergibt sich eine Ausbeute von 2,54 g ( 70 % d. Th.).

### Darstellung von 2-Bromo-5-hydroxy-benzaldehyd

Zu einer Lösung von 10g 3-Hydroxy-benzaldehyd (82 mmol) in 100ml Chloroform wird eine Lösung von 4,2ml Brom (82 mmol) in 30ml Chloroform langsam zugetropft. Die Reaktionslösung wird anschließend mit 50ml 6%iger Natriumcarbonatlösung versetzt und heftig gerührt. Nach Beendigung der Neutralisation werden die Phasen getrennt und das Lösungsmittel der organischen Phase entfernt. Das Rohprodukt wird mit verdünnter Essigsäure umkristallisiert, worauf 8,24g des Produktes (7) mit einer Ausbeute von 50 % als weisse Nadeln erhalten werden. Die Ausbeute läßt sich auf 65 % steigern, indem der Rückstand in der Mutterlauge (Mischung aus 2-Bromo-5-hydroxy-benzaldehyd und 4-Bromo-5-hydroxybenzaldehyd) säulenchromatographisch aufgearbeitet wird.

Darstellung von 2-Bromo-5-(tert-butyl-dimethyl-silanyloxy)benzaldehyd

Eine Lösung von 10 g 2-Bromo-5-hydroxy-benzaldehyd (49 mmol), 8,9 g tert-Butyldimethylsilylchlorid (59,6 mmol) und 8,11 g Imidazol in 20 ml Dimethylformamid wird bei Raumtemperatur eine Stunde unter Schutzgasatmosphere gerührt. Anschließend wird die Reaktionslösung mit 100 ml gesättigter Ammoniumhydrochlorid-Lösung versetzt und 15 Minuten gerührt. Die Rohlösung wird zweimal mit 100 ml Methylenchlorid extrahiert. Nachfolgend werden die vereinigten organischen Phasen drei mal mit Wasser und einmal, mit gesättigter Natriumchlorid-Lösung gewaschen und anschließend mit Magnesiumsulfat getrocknet. Nach Entfernung des Lösungsmittels am Rotationsverdampfer und anschließender Trocknung im Hochvakuum ergeben 14,98 g des chromatographisch sauberen Produkts mit einer Ausbeute von 97 %.

### Darstellung von 5-(tert-Butyl-dimethyl-silanyloxy)-2-diphenylphosphanyl-benzaldehyd

15,15g 2-Bromo-5-(tert-butyl-dimethyl-silanyloxy)benzaldehyd (48 mmol) und 10,8 ml Diphenylphosphin (62 mmol) werden in einem Dreihalskolben mit Rückflusskühler nach Zugabe von 8,7 ml Triethylamin (62 mmol) und 334 mg Tetrakis-(triphenylphosphin)-palladium (0,28 mmol) in 150 ml absolutem Toluol unter Schutzgasatmosphere refluxiert. Im Verlauf der Reaktion fällt Triethylaminhydrobromid als weisser Feststoff aus. Nach 12 Stunden wird die Reaktionslösung filtriert, drei mal mit gesättigter Ammoniumhydrochlorid-Lösung und einmal mit Wasser gewaschen. Anschließend wird das Produkt mit Magnesiumsulfat getrocknet, das Lösungsmittel am Rotationsverdampfer entfernt und im Hochvakuum getrocknet. Laut GC-MS entspricht das Produkt einer Reinheit von 97 % und kann unmittelbar für folgende Reaktionen eingesetzt werden. Ausbeute 16,14g (80 %.d. Th.).

### Darstellung von 2-Diphenylphosphanyl-5-hydroxy-benzaldehyd

Eine Lösung von 11,61 g 5-(tert-Butyl-dimethyl-silanyloxy)-2-diphenylphosphanyl-benzaldehyd (28 mmol), 3,2 g Kaliumflourid (55 mmol) und 1,29 ml 48%ige Bromwasserstoffsäure (7 mmol) in 150 ml Dimethylformamind wird 1 Stunde bei Raumtemperatur unter Schutzgasatmosphere gerührt. Anschließend wird die Reaktionslösung mit 100 ml gesättigter Ammoniumchloridlösung versetzt und zweimal mit Methylenchlorid extrahiert. Die organische Phase wird drei mal mit Wasser und einmal mit gesättigter Natriumchloridlösung gewaschen und anschließend mit Magnesiumsulfat getrocknet. Nach Entfernung des Lösungsmittels am Rotationsverdampfer und Trocknung im Hochvakuum kann das erhaltene Produkt (8,15 g entsprechend 95 % Ausbeute) unmittelbar für die nachfolgende Reaktion eingesetzt werden.

### Darstellung von 2-Diphenylphosphanyl-5-(4-vinyl-benzyloxy)benzaldehyd

7,3 g 2-Diphenylphosphanyl-5-hydroxy-benzaldehyd (24 mmol) werden in 100 ml Dimethylformamid unter Schutzgasatmosphere bei Raumtemperatur mit 2,41 g Natriumhydrid (96 mmol) versetzt. Nach Abklingen der Wasserstoffentwicklung (ca. 1 Stunde) werden 528 mg 2,6-Di-tert.-butyl-p-kresol (2,4 mmol) als Stabilisator und 3,53 ml p-Vinylbenzylchlorid (24 mmol) langsam zugegen. Nach 12 Stunden wird mit 100 ml gesättigter Ammoniumchloridlösung versetzt und zweimal mit Methylenchlorid extrahiert. Die organische Phase wird drei mal mit Wasser und einmal mit gesättigter Natriumchloridlösung gewaschen. Nachfolgend wird mit Magnesiumsulfat getrocknet und das Lösungsmittel entfernt. Das Rohprodukt wird chromatographisch an Kieselgel aufgereinigt (Isohexan/Ethylacetat 12 zu 1). Es werden 5,67 g des Produktes als gelber Feststoff erhalten (Ausbeute 56%).

### Darstellung von (1R,2R)-N-(2-Diphenylphosphanyl-benzyl)-N'-[2-diphenylphosphanyl-5-(4-vinyl-benzyloxy)-benzyl]cyclohexan-1,2-diamin

2,54 g (1R,2R)-*N-*(2-Diphenylphosphanyl-benzyl)-cyclohexane-1,2-diaminhydrochlord (6 mmol) werden mit 100 ml Methylenchlorid und 100 ml gesättigter Natriumhydrogencarbonatlösung versetzt. Nach Phasentrennung wird die wässrige Phase wird zwei weitere Male mit Methylenchlorid extrahiert und die vereinigten organischen Phasen mit gesättigter Natriumchloridlösung gewaschen. Anschließend erfolgt Trocknung mit Magnesiumsulfat und Entfernung des Lösungsmittels am Rotationsverdampfer. Nach Trocknung im Hochvakuum werden 1,71 g (1R,2R)-N-(2-Diphenylphosphanyl-benzyl)cyclohexane-1,2-diamin (4,4 mmol) als luftempfindliches klares Öl erhalten. Dieses wird unter Schutzgasatmosphere in einem Dreihalskolben mit Rückflusskühler in 250 ml absolutem Ethanol gelöst. Nach Versetzen mit 1,85 g 2-Diphenylphosphanyl-5-(4-vinyl-benzyloxy)-benzaldehyd (4,4 mmol) und 96 mg 2,6-Di-tert.-butyl-p-kresol (0,4 mmol) wird die Reaktionslösung 1 Stunde unter Schutzgas refluxiert. Anschließend läßt man das Reaktionsgemisch abkühlen und versetzt mit 1,66 g Natriumborhydrid (44 mmol). Nach drei Stunden wird durch Zugabe von 50 ml Aceton gequenscht und das Lösungsmittel am Rotationsverdampfer vollständig entfernt. Der erhaltene Rückstand wird mit 100 ml gesättigter Ammoniumhydrochlorid-Lösung und 100 ml Methylenchlorid bis zur vollständigen Auflösung gerührt. Die wässrige Phase wird zwei weitere male mit Methylenchlorid extrahiert und die vereinigten organischen Phasen mit Wasser und gesättigter Natriumchloridlösung gewaschen. Nachfolgend wird mit Magnesiumsulfat getrocknet und das Lösungsmittel entfernt. Nach Trocknung im Hochvakuum werden 2,83 g des Produktes entsprechend einer Ausbeute von 79 % als weisse Masse erhalten (Stabilisatoranteil laut NMR 9,4%).

### Darstellung von Rutheniumdichlorid-(1R,2R)-N-(2-Diphenylphosphanyl-benzyl)-N'-[2-diphenylphosphanyl-5-(4-vinyl-benzyloxy)-benzyl]-cyclohexan-1,2-diamin

2,83 g (1R,2R)-N-(2-Diphenylphosphanyl-benzyl)-N'-[2-diphenylphosphanyl-5-(4-vinyl-benzyloxy)-benzyl]cyclohexan-1,2-diamin (3,5 mmol, 9,4% Stabilisator) werden unter Schutzgas mit 3,36 g Dichlorotetrakis(dimethyl sulphoxide)ruthenium (II) (7 mmol) in 200 ml absolutem Toluol für 1 Stunde refluxiert. Während der Reaktion fällt 120 mg eines gelblichen Feststoffs aus, welcher als Ruthenium-Stabilisatorkomplex identifiziert werden kann. Nach Filtration der Reaktionslösung wird das Lösungsmittel am Rotationsverdampfer entfernt und das Produkt säulenchromatographisch an Kieselgel getrennt (Isohexan/Ethylacetat 2 zu 1). Zur Produktgewinnung sollten die Chromatographiefraktionen hierbei nicht bis zur Trockene eingedampft werden, sondern nach weitgehender Entfernung des E-luentens mit Isohexan versetzt werden. Als Folge fällt das Produkt als gelb-oranges Pulver mit einer Ausbeute von 1,86 g (55%) aus.

### Polymeranbindung des Katalysators

299 mg des anbindungsfähigen Katalysators (0,31 mmol) werden mit 1 g Polysiloxanpolymer (Molekulargewicht ca. 11700 g/mol, 0,08 mmol, Funktionalisierung 19 %) in 25 ml absolutem Toluol gelöst. Anschließend wird das Reaktionsgemisch entgast (freeze/pump/thaw - Technik), mit 10 µl Platindivinyltetramethyl-disiloxan-Katalysators versetzt und für eine Stunde bei 50° C gerührt. Der Reaktionsverlauf läßt sich mittels NMR-Spektroskopie verfolgen (Verschwinden der Vinyl-Protonen-Signale bei 5,2 und 5,7 ppm). Anschließend werden die verbleibenden Hydrido-Siloxan-Einheiten durch Versetzten mit 1 g Vinyl-tris-(2-methoxyethoxy)-silan (3,5 mmol) und weiterem Rühren bei 50°C über Nacht umgesetzt. Das funktionalisierte Polymer wird anschließend mittels Nanofiltration aufgereinigt (MPF-50-Membran, Celfa, Lösungsmittel Methylenchlorid, 10 ml Reaktor, 20 Verweilzeiten). Nach Entfernung des Lösungsmittel am Rotationsverdampfer und Trocknung im Hochvakuum werden 1,45 g des polymergebundenen Katalysators erhalten.

### Einfluß der Basenkonzentration auf katalytische Aktivität und Enantiomerenüberschuss

Um den Einfluss unterschiedlicher Isopropylatkonzentrationen auf die katalytische Aktivität und den Enantiomerenüberschuss zu untersuchen, wurden Aktivitätsmessungen mit variablen Isopropylatkonzentrationen durchgeführt (wie oben beschrieben). Die Basenkonzentration für die Katalysatoraktivierung wurde hierbei im Bereich von 0,125 mM bis 4 mM variiert. Die Acetophenonkonzentration lag bei 250 mM und die Katalysatorkonzentration bei 0,5 mM. Die Ansätze wurden im 20 ml Maßstab bei 45°C und 45 min Inkubationszeit durchgeführt. Als Ergebnis läßt sich festhalten (Figur 3), daß höhere Basenkonzentrationen eine stärkere Aktivierung (zunehmende turn over frequency unter Anfangsreaktionsgeschwindigkeitsbedingungen, tofᵢₙᵢₜ) des Katalysators bedingen. Gleichzeitig zeigt sich, daß der Verlauf des Enantiomerenüberschusses mit höheren Basenkonzentrationen im Verlauf des Batchexperiments mit steigenden Umsatz ungünstiger verläuft (Figur 4).

### Durchführung kontinuierlicher Reaktionen im Membranreaktor

Die kontinuierlichen Experimente werden in einem auf 45°C temperierten Membranreaktor (10, bzw. 3 ml Reaktor) unter Verwendung der Nanofiltrationsmembran YC 05 von Amicon durchgeführt. Als Lösungsmittel bzw. Wasserstoff-donor diente absolutiertes und entgastes Isopropanol.

Zu Beginn des ersten Versuches (Figur 5) wurden 146 mg des polymergebundenen Katalysators (Funktionalisierung 0,308 mmol/g, Darstellung siehe oben) in 10 ml absolutem Isopropanol gelöst und in den Membranreaktor (Reaktorvolumen 10 ml) eingespült. Anschließend erfolgte die Zudosierung von 5 Äquivalenten Base in Form einer 0,1 M isopropanolischen Kaliumisopropylatlösung. Nachfolgend wird das Substrat Acetophenon als 25 mM Lösung dem Reaktor kontinuierlich zugeführt. Die Katalysatorkonzentration bezogen auf das Substrat betrug hierbei 28 mol%. Der Lösungsmittelstrom war so bemessen, daß die Verweilzeit des Substrats im Reaktor eine Stunde betrug.

Der zweite Versuch (Figur 6) erfolgte unter vergleichbaren Bedingungen wie der erste. Im Gegensatz hierzu wurde jedoch anfänglich nur ein Äquivalent Base bezogen auf den Katalysator zudosiert. Zusätzlich erfolgte eine konstante minimale Basenzudosierung während der Reaktion. Die Basenkonzentration war hierbei derart bemessen, daß eine durch Feuchtigkeit, bzw. Ausspülung verloren gegangene Basenmenge ersetzt wurde (0,05 mM/ Verweilzeit). Die Verweilzeit des Substrats sollte ebenfalls 1 Stunde betragen. Aufgrund von Ungenauigkeiten in der Pumprate kam es jedoch zu Verweilzeitschwankungen, so daß in Figur 6 eine reale Verweilzeit angegeben wird, welche das tatsächlich ausgetauschte Reaktorvolumen beschreibt.

## Patentansprüche

1. Verwendung von molekulargewichtsvergrößerten homogen löslichen Katalysatoren in einem Membranreaktor in einem Verfahren zur asymmetrischen kontinuierlichen Hydrierung von C=C-, C=N- oder C=O-Doppelbindungen,
dadurch gekennzeichnet, daß
die asymmetrische Übertragung des Wasserstoffs auf das Substrat durch den Katalysatoren bewerkstelligt wird.

2. Verwendung nach Anspruch 1,
dadurch gekennzeichnet, daß
man im Dead-End- oder Cross-Flow-Fltrationsmodus arbeitet.

3. Verwendung nach einem oder mehreren der vorhergehenden Ansprüche,
dadurch gekennzeichnet, daß
man die Hydrierung mit Wasserstoff oder als Transferhydrierung durchführt.

4. Verwendung nach Anspruch 1 und/oder 3, sofern Anspruch 3 sich nicht auf die Transferhydrierung bezieht,
dadurch gekennzeichnet, daß
man bei Drücken von 0,1 -100, vorzugsweise 0,2 - 0,5 MPa hydriert.

5. Verwendung nach einem oder mehreren der vorhergehenden Ansprüche,
dadurch gekennzeichnet, daß
man als molekulargewichtsvergrößernde Verbindung ein Polymer ausgewählt aus der Gruppe der Polyacrylate, Polyvinylpyrrolidinone, Polysiloxane, Polybutadiene, Polyisoprene, Polyalkane, Polystyrole, Polyoxazoline oder Polyether oder Mischungen derselben einsetzt.

6. Verwendung nach einem oder mehreren der vorhergehenden Ansprüche,
dadurch gekennzeichnet, daß
die Katalysatoren ein Molekulargewicht im Bereich von 1.000 - 1.000.000, vorzugsweise 5.000 - 300.000, g/mol besitzen.

7. Verwendung nach einem oder mehreren der vorhergehenden Ansprüche,
dadurch gekennzeichnet, daß
das eigentlich aktive Zentrum direkt oder über einen Linker ausgewählt aus der Gruppe der
| | | |
|---|---|---|
| a) | -Si(R₂)- | |
| b) | -(SiR₂-O)ₙ- | n=1-10000 |
| c) | -(CHR-CHR-O)ₙ- | n=1-10000 |
| d) | -(X)ₙ- | n=1-20 |
| e) | Z-(X)ₙ- | n=0-20 |
| f) | -(X)ₙ-W | n=0-20 |
| g) | Z-(X)ₙ-W | n=0-20 |
wobei
R bedeutet H, (C₁-C₈)-Alkyl, (C₆-C₁₈)-Aryl, (C₇-C₁₉)-Aralkyl, ((C₁-C₈)-Alkyl)₁₋₃-(C₆-C₁₈)-Aryl,
X bedeutet (C₆-C₁₈)-Arylen, (C₁-C₈)-Alkylen, (C₁-C₈)-Alkenylen, ((C₁-C₈)-Alkyl)₁₋₃-(C₆-C₁₈)-Arylen, (C₇-C₁₉)-Aralkylen,
Z bedeutet polymerseitig C(=O)O-, C(=O)NH-, C(=O)-,
NR, O, CHR, CH₂, C=S, S, PR,
W bedeutet ligandenseitig C(=O)O-, C(=O)NH-, C(=O)-,
NR, O, CHR, CH₂, C=S, S, PR,
an das Polymer gebunden ist.

8. Verwendung nach einem oder mehreren der vorhergehenden Ansprüche,
dadurch gekennzeichnet, daß
das aktive Zentrum aus der folgenden Gruppe von allgemeinen chemischen Strukturen ausgewählt ist:

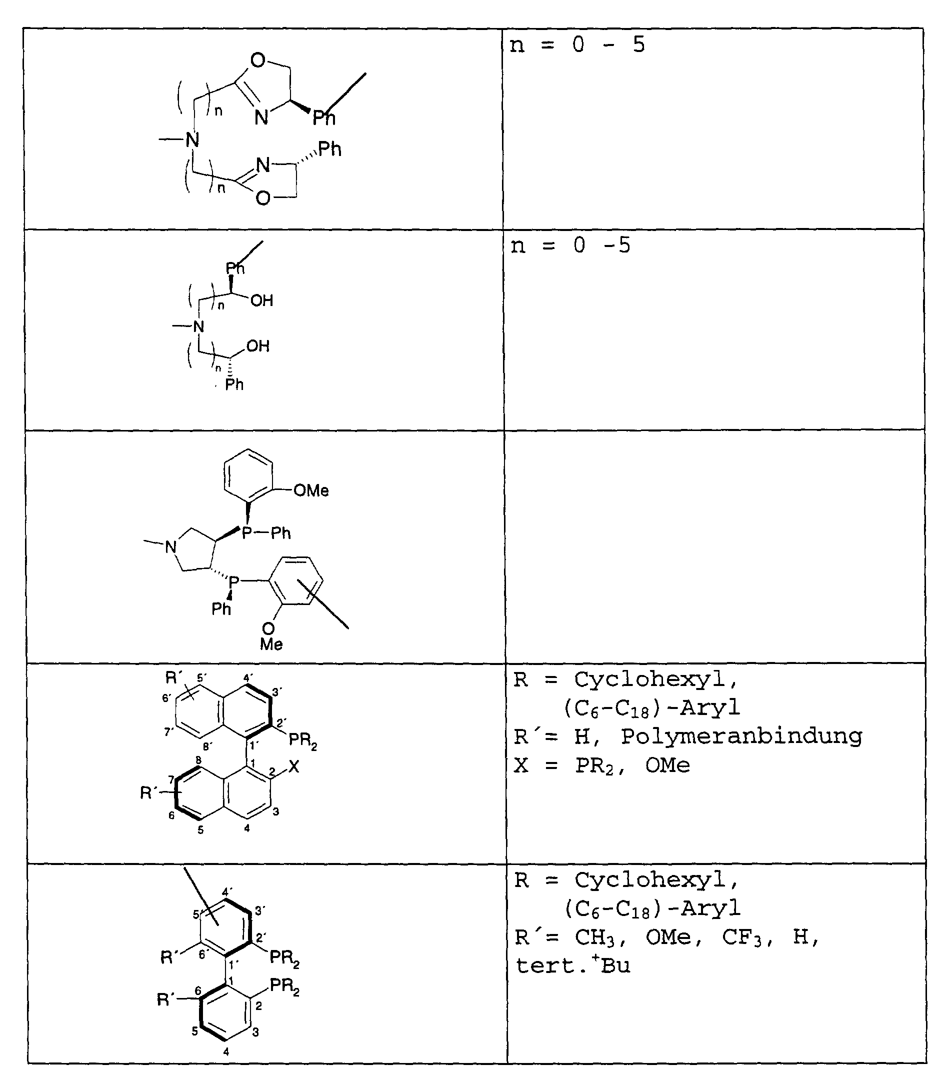

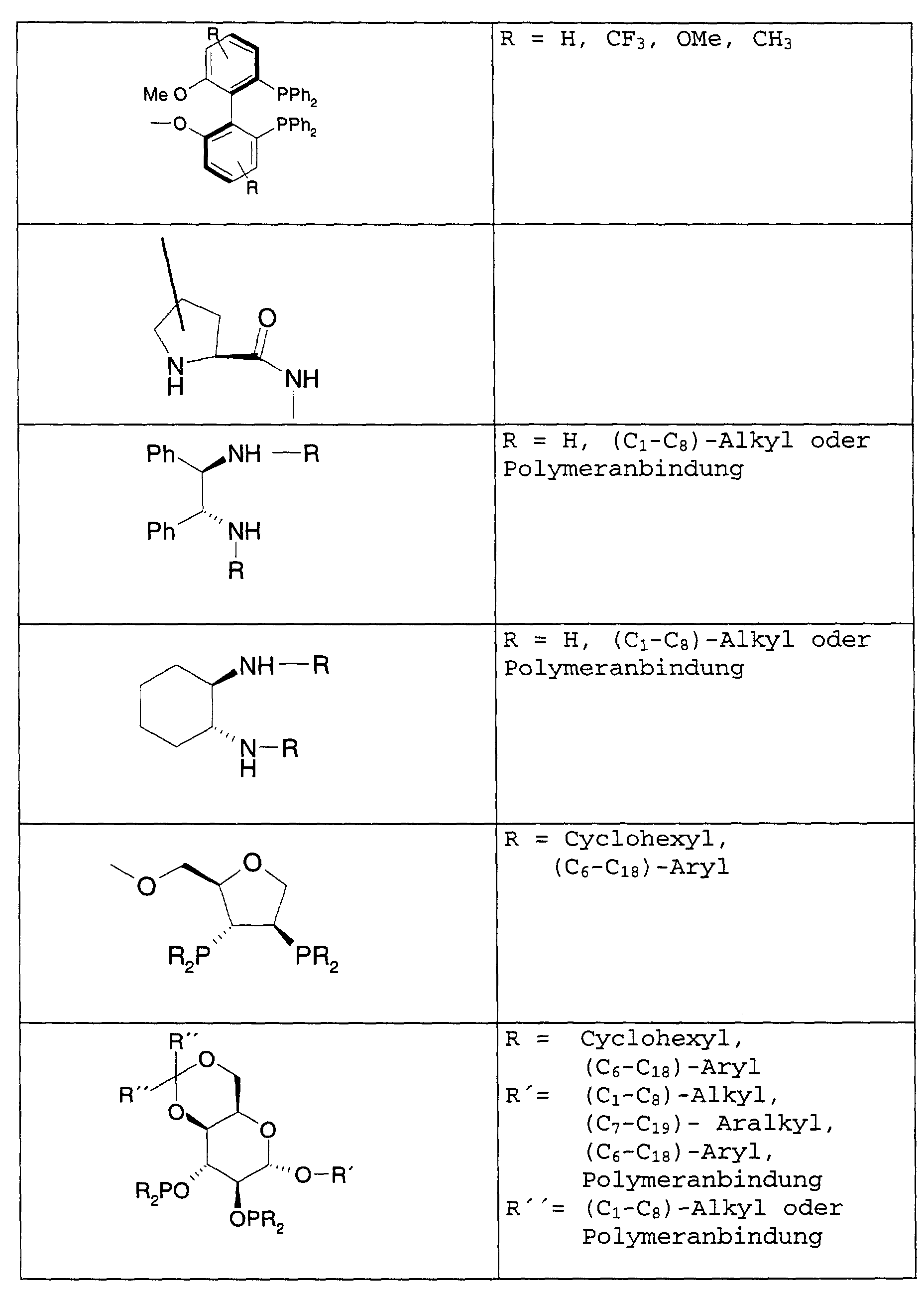

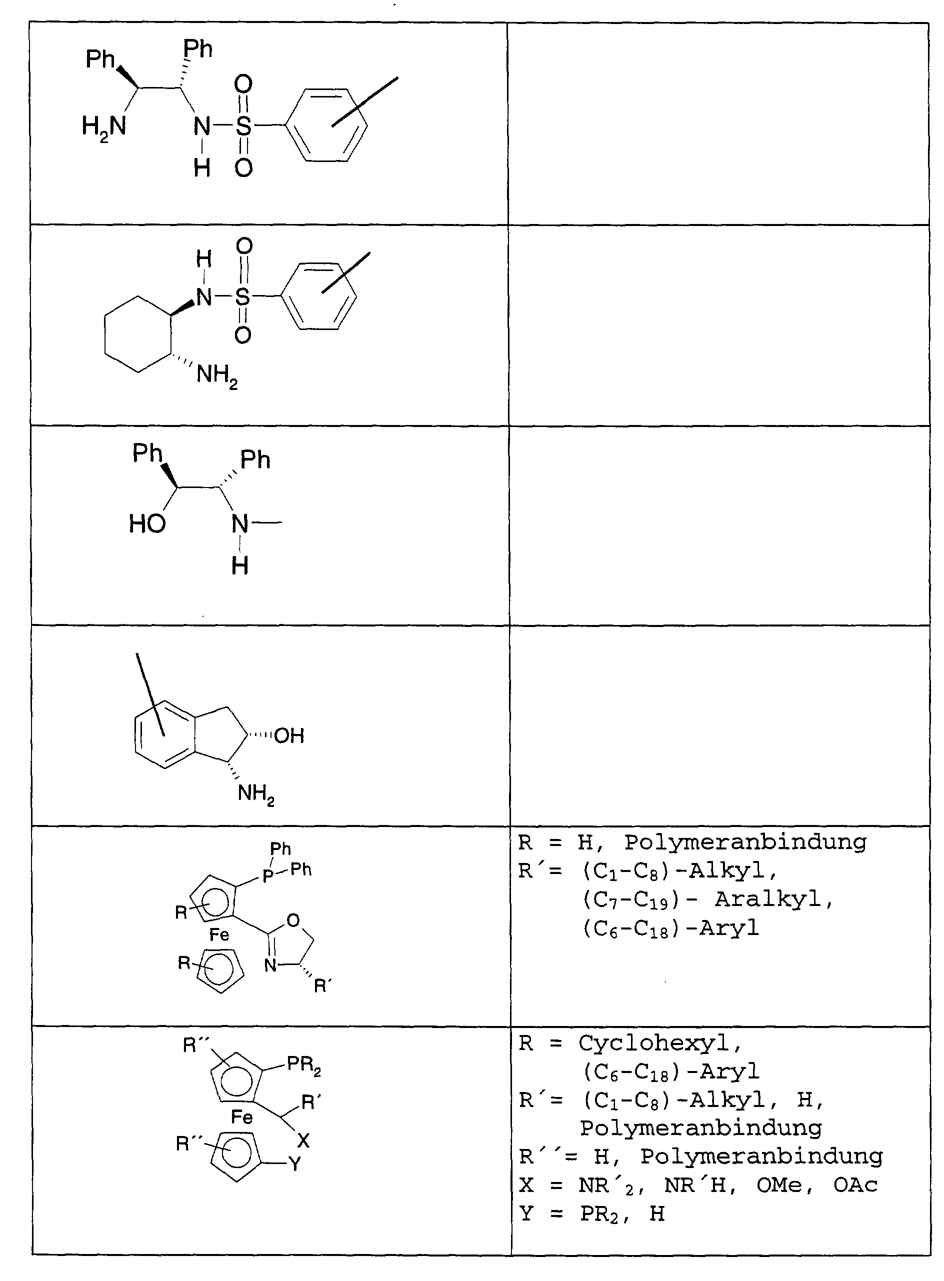

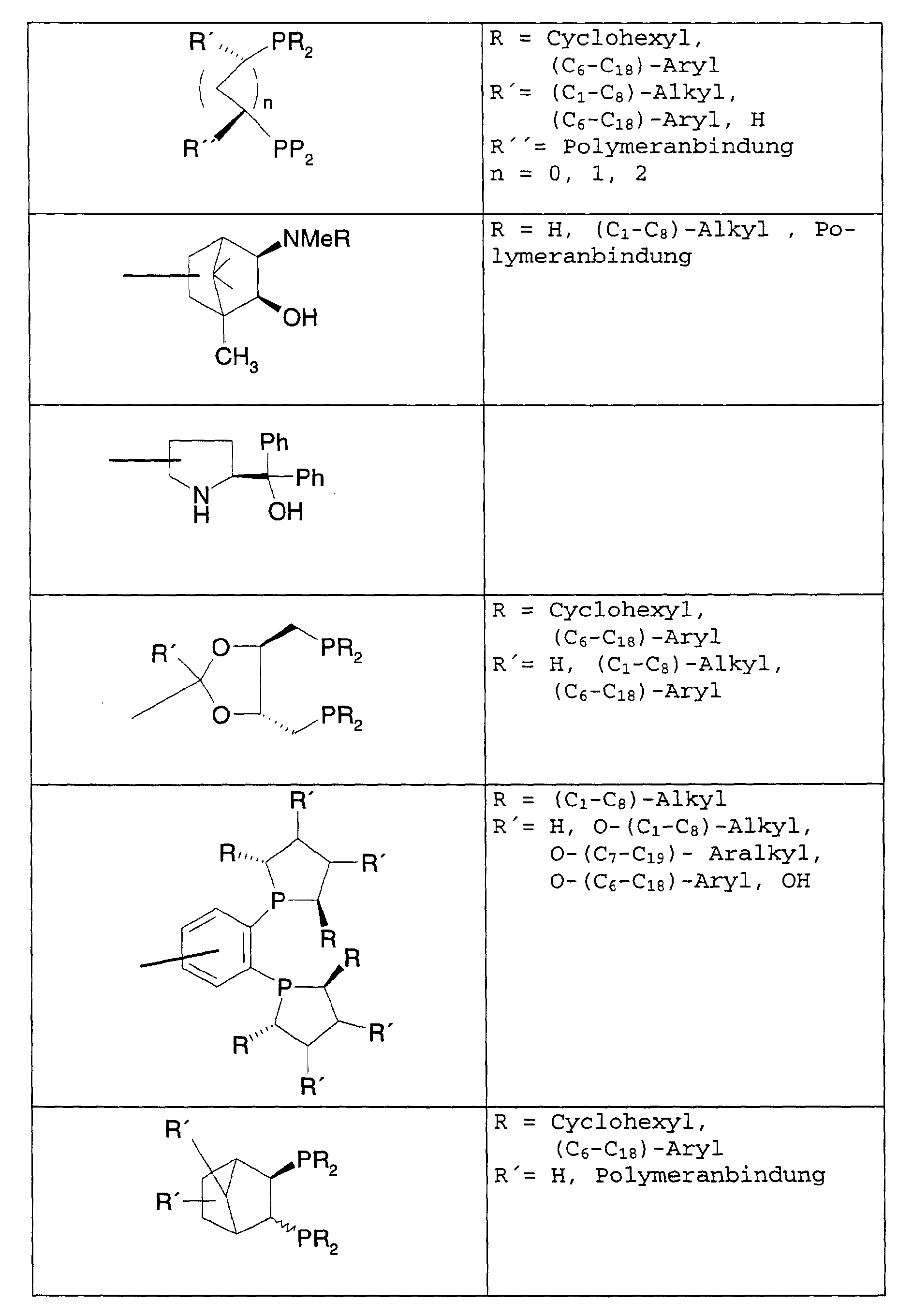

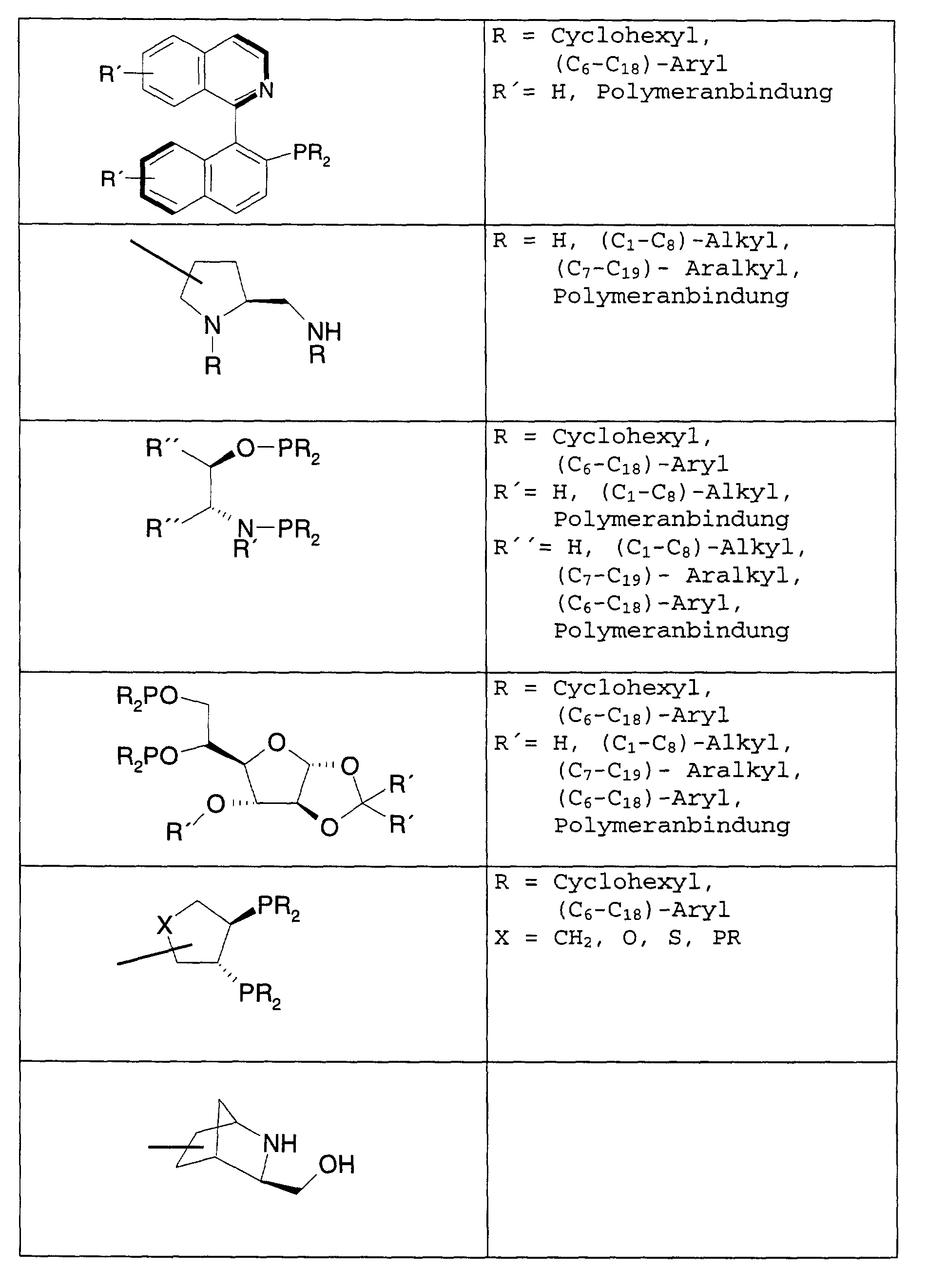

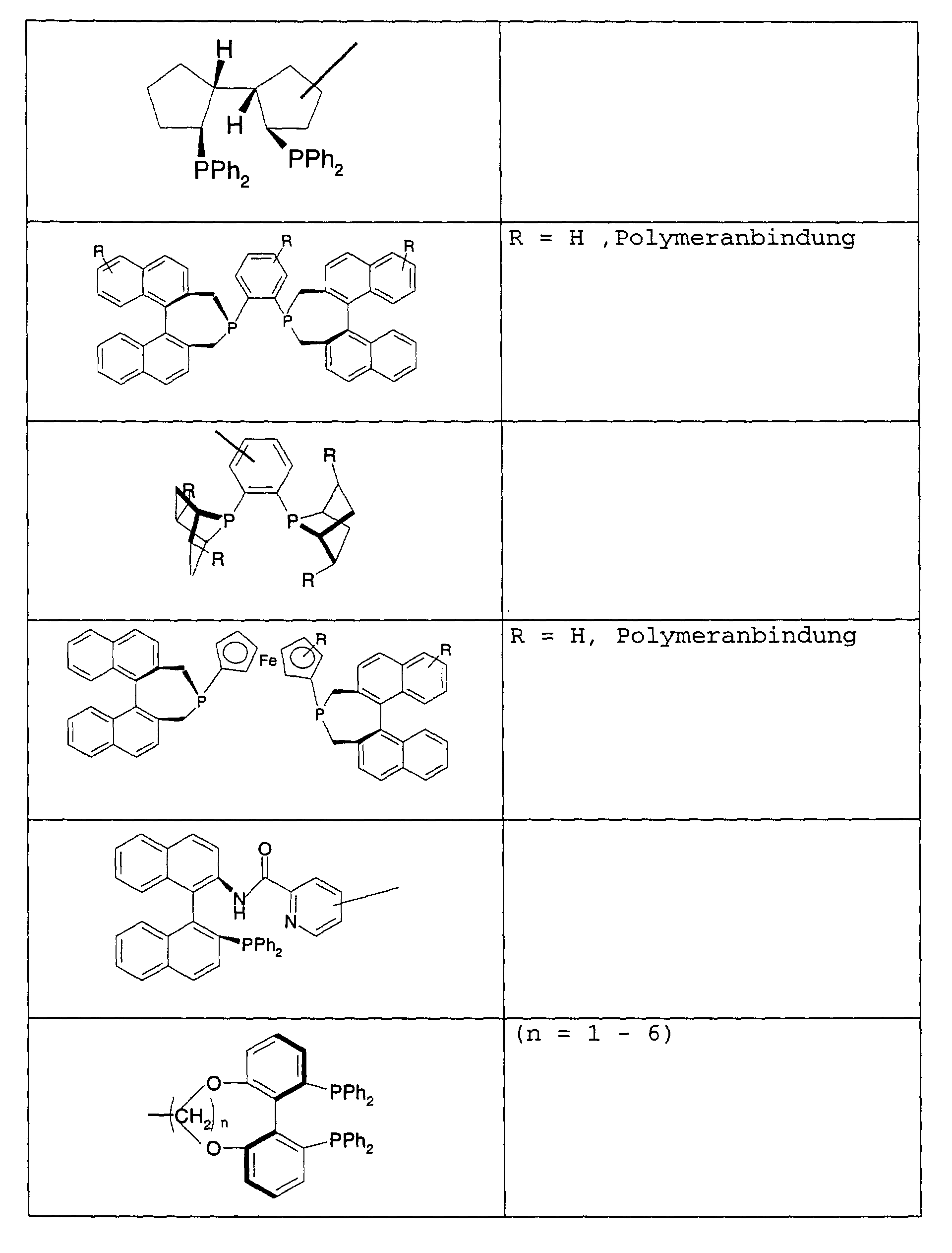

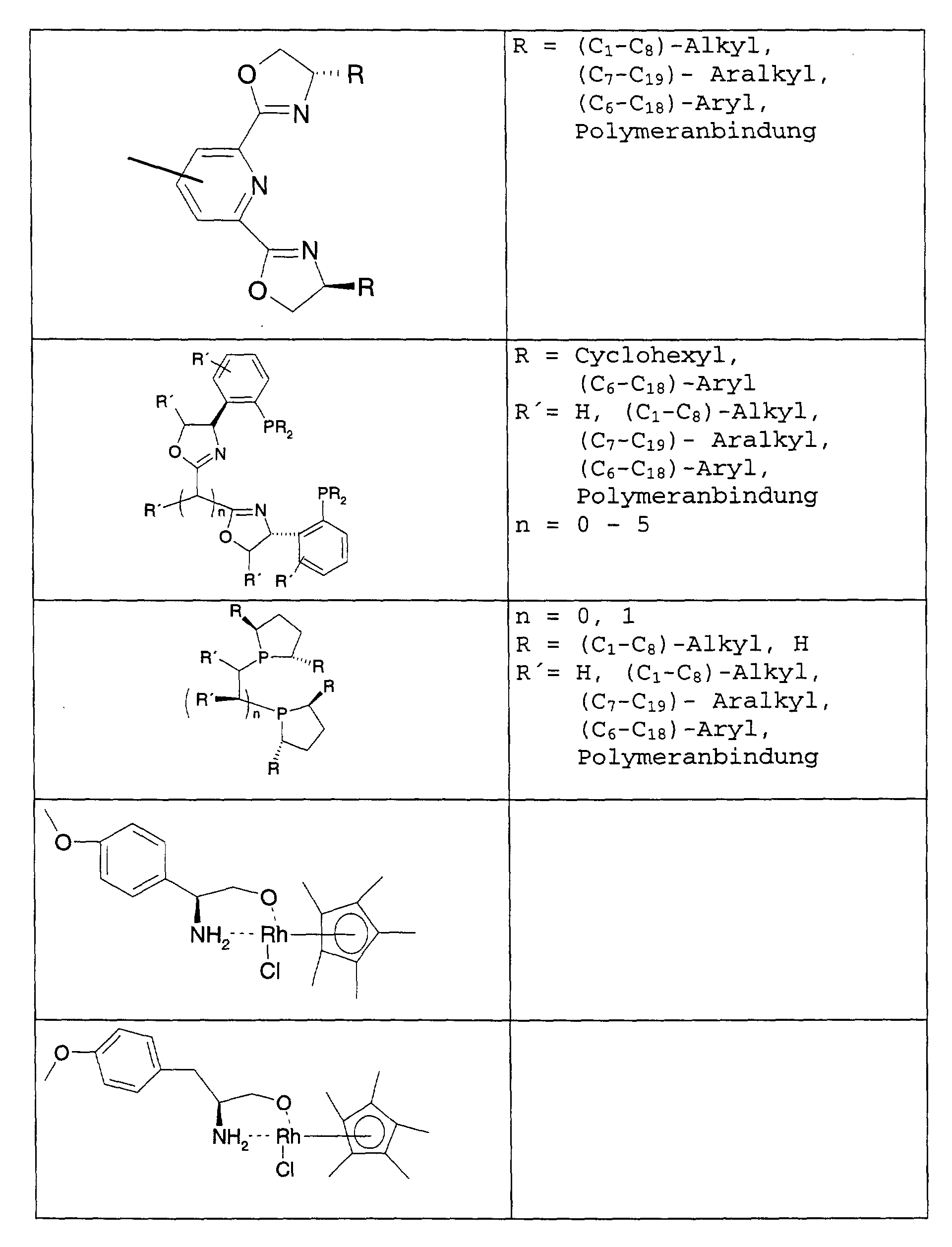

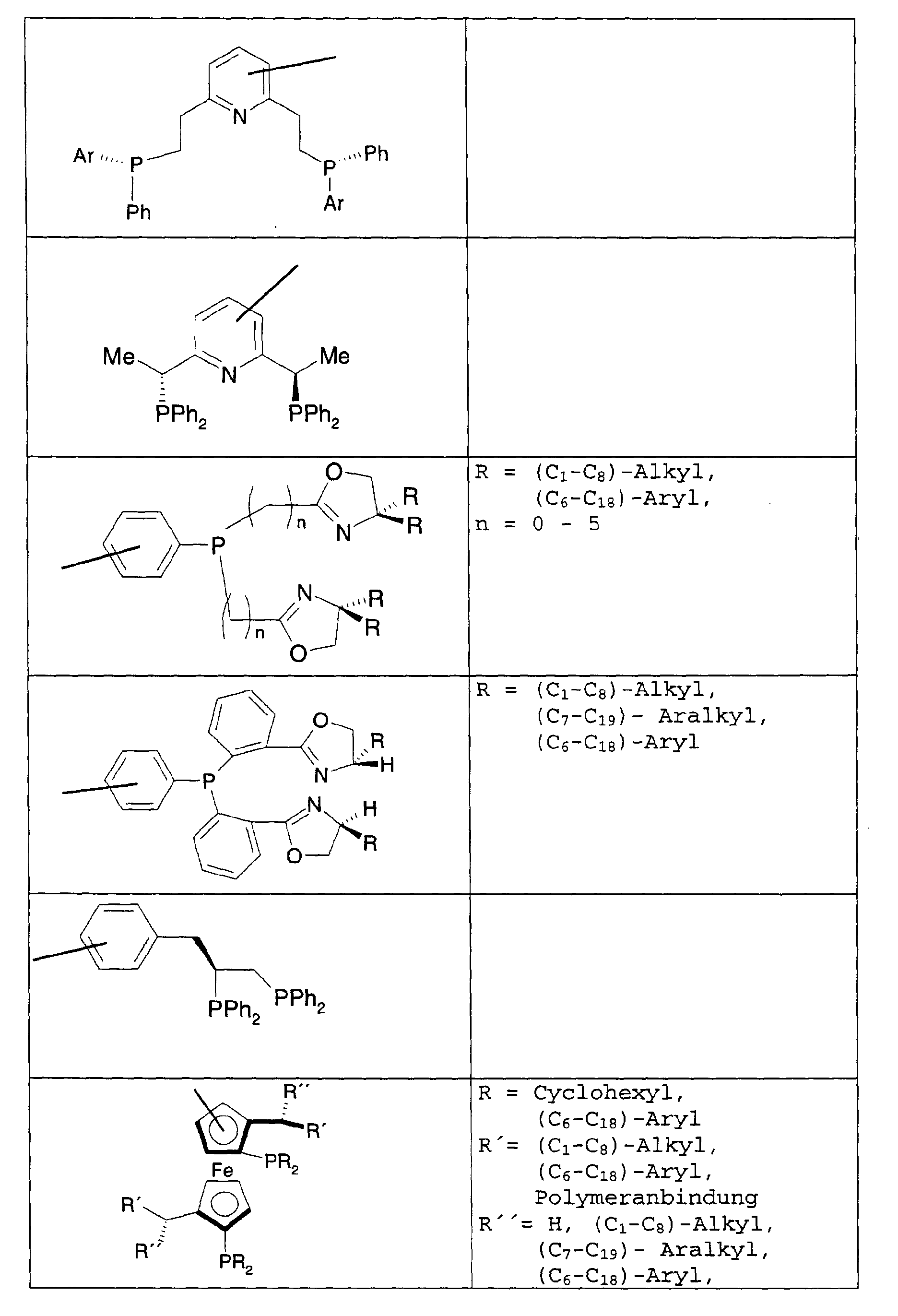

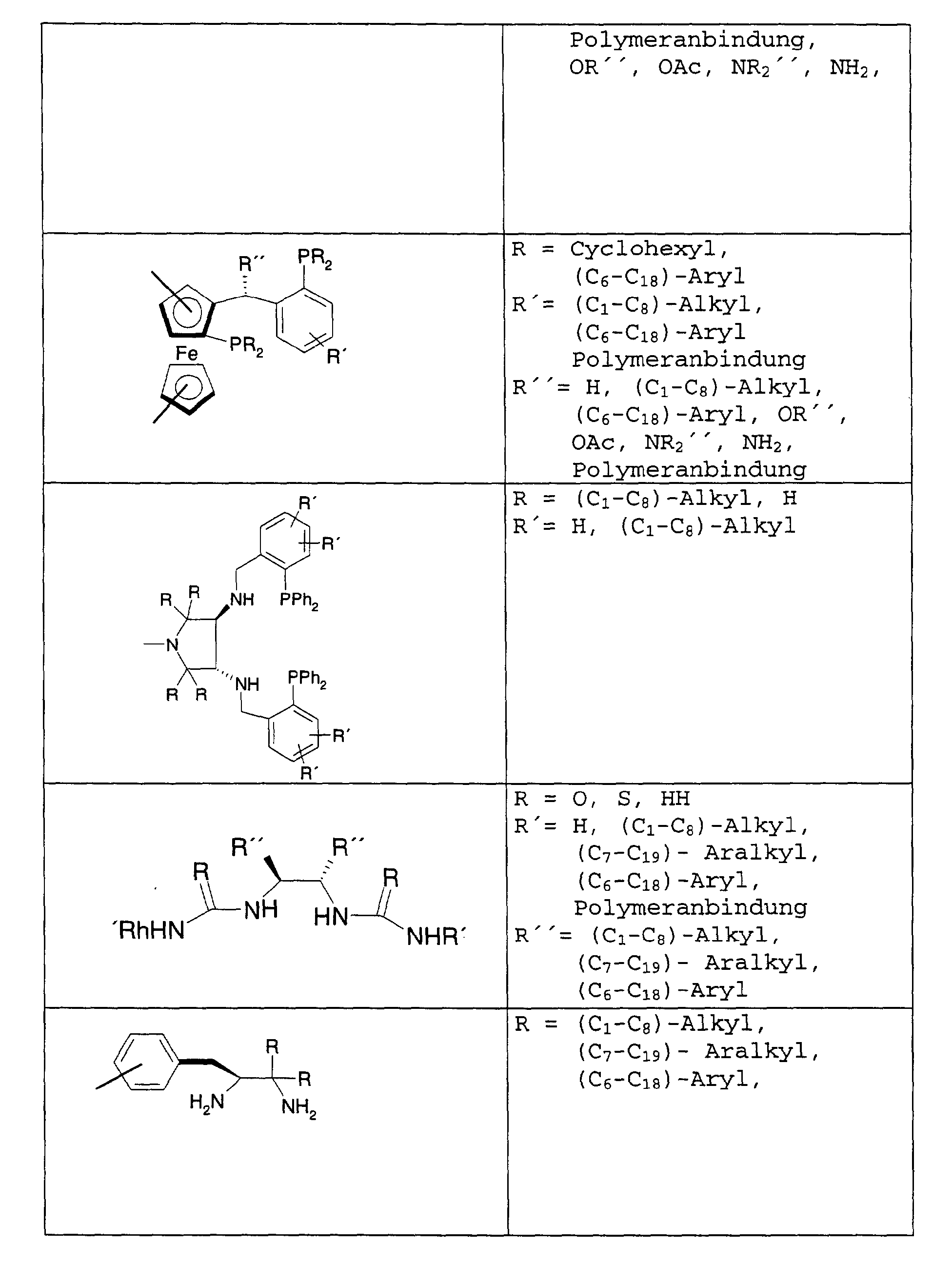

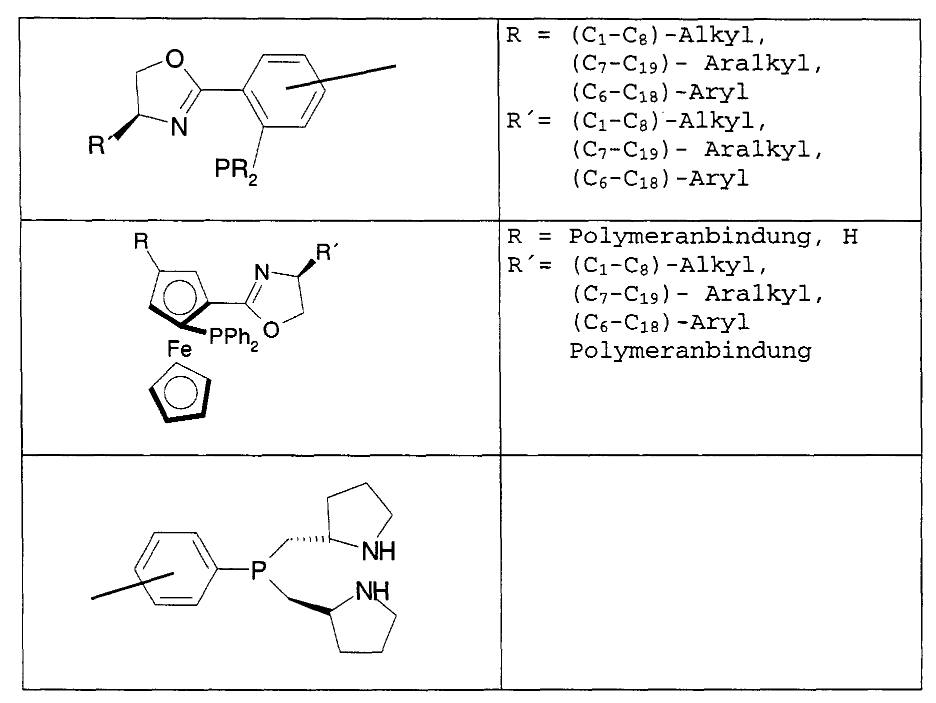

9. Verwendung nach einem oder mehreren der vorhergehenden Ansprüche,
dadurch gekennzeichnet, daß
der Katalysator Metalle oder Metallionen ausgewählt aus der Gruppe
Ru, Rh, Ir, Pd, Ni, Pt, Co
aufweist.

10. Verwendung der nach Anspruch 1 hydrierten Produkte in Verfahren zur Herstellung organischer Verbindungen.

11. Molekulargewichtsvergrößerte homogen lösliche Liganden für Hydrierkatalysatoren aufweisend homochirale aktive Zentren aus Di-1,3-aminophosphinen wobei diese Zentren über einen Linker ausgewählt aus der Gruppe
| | | |
|---|---|---|
| a) | -Si(R₂)- | |
| b) | -(SiR₂-O)ₙ- | n=1-10000 |
| c) | -(CHR-CHR-O)ₙ- | n=1-10000 |
| d) | -(X)ₙ- | n=1-20 |
| e) | Z-(X)ₙ- | n=0-20 |
| f) | -(X)ₙ-W | n=0-20 |
| g) | Z-(X)ₙ-W | n=0-20 |
wobei
R bedeutet H, (C₁-C₈)-Alkyl, (C₆-C₁₈)-Aryl, (C₇-C₁₉)-Aralkyl, ((C₁-C₈)-Alkyl)₁₋₃-(C₆-C₁₈)-Aryl,
X bedeutet (C₆-C₁₈)-Arylen, (C₁-C₈)-Alkylen, (C₁-C₈)-Alkenylen, ((C₁-C₈)-Alkyl)₁₋₃-(C₆-C₁₈)-Arylen, (C₇-C₁₉)-Aralkylen,
Z bedeutet polymerseitig C(=O)O-, C(=O)NH-, C(=O)-,
NR, O, CHR, CH₂, C=S, S, PR,
W bedeutet ligandenseitig C(=O)O-, C(=O)NH-, C(=O)-,
NR, O, CHR, CH₂, C=S, S, PR,
oder direkt an das molekulargewichtsvergrößernde Polymer gebunden sind.

12. Ligand nach Anspruch 10,
dadurch gekennzeichnet, daß
die Molekulargewichtsvergrößerung durch Polyacrylate, Polyvinylpyrrolidinone, Polysiloxane, Polybutadiene, Polyisoprene, Polyalkane, Polystyrole, Polyoxazoline oder Polyether oder Mischungen derselben gebildet wird.

13. Ligand nach Anspruch 10 und/oder 11,
dadurch gekennzeichnet, daß
die Molekulargewichtsvergrößerung durch Polysiloxane, Polystyrole, Polyether oder Polyacrylate gebildet wird.

14. Ligand nach einem oder mehreren der Ansprüche 10 bis 12,
dadurch gekennzeichnet, daß
dessen mittleres Molekulargewicht im Bereich von 1.000 - 1.000.000, vorzugsweise 5.000 - 300.000 g/mol liegt.

15. Ligand nach einem oder mehreren der Ansprüche 10 bis 13,
dadurch gekennzeichnet, daß
er als aktives Zentrum eine N,N'-Bis-(2-Diphenylphosphanyl-benzyl)-cyclohexyl-1,2-diamineinheit aufweist.

16. Verfahren zur Herstellung von Liganden nach Anspruch 10 bis 14,
dadurch gekennzeichnet, daß man
a) das katalytisch aktive Zentrum mit angebundenem Linker oder direkt an ein Monomer bindet und dieses in Gegenwart nicht modifizierter Monomere polymerisiert,
b) das katalytisch aktive Zentrum über einen Linker oder direkt an das fertige Polymer bindet, oder
c) Polymere nach a) oder b) erstellt und diese mit anderen Polymeren copolymerisiert, welche katalytisch aktive Zentren aufweisen oder keine katalytisch aktiven Zentren aufweisen.

17. Molekulargewichtsvergrößerter Katalysator
dadurch gekennzeichnet, daß
er aus einem Liganden nach einem oder mehreren der Ansprüche 10-14 und Metallen oder Metallionen ausgewählt aus der Gruppe
Ru, Rh, Ir, Pd, Ni, Pt, Co
aufgebaut ist.
